(19) **Europäisches Patentamt**
**European Patent Office**
**Office européen des brevets**

(11) **EP 2 920 935 B1**

(12) **FASCICULE DE BREVET EUROPEEN**

(45) Date de publication et mention
de la délivrance du brevet:
**12.10.2016 Bulletin 2016/41**

(51) Int Cl.:
*H04L 27/26* *(2006.01)*

(21) Numéro de dépôt: **13803156.2**

(22) Date de dépôt: **19.11.2013**

(86) Numéro de dépôt international:
**PCT/FR2013/052775**

(87) Numéro de publication internationale:
**WO 2014/076438 (22.05.2014 Gazette 2014/21)**

(54) **PROCÉDÉ DE DÉTERMINATION D'AU MOINS UN FILTRE D'UN BANC DE FILTRES D'UN SYSTÈME DE TRANSMISSION OU DE CODAGE, DISPOSITIF ET PROGRAMME D'ORDINATEUR CORRESPONDANTS**

VERFAHREN ZUR BESTIMMUNG VON MINDESTENS EINEM FILTERBANKFILTER IN EINEM ÜBERTRAGUNGS- ODER KODIERUNGSSYSTEM SOWIE ENTSPRECHENDE VORRICHTUNG UND ENTSPRECHENDES COMPUTERPROGRAMMPRODUKT

METHOD OF DETERMINING AT LEAST A FILTERBANK FILTER IN A TRANSMISSION OR CODING SYSTEM, AND CORRESPONDING APPARATUS AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2012 FR 1260950**

(43) Date de publication de la demande:
**23.09.2015 Bulletin 2015/39**

(73) Titulaire: **Orange**
**75015 Paris (FR)**

(72) Inventeurs:
• **SIOHAN, Pierre**
**F-35200 Rennes (FR)**
• **PINCHON, Didier**
**F-31400 Toulouse (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
• **PINCHON D ET AL: "Closed-Form Expressions of Optimal Short PR FMT Prototype Filters", GLOBAL TELECOMMUNICATIONS CONFERENCE (GLOBECOM 2011), 2011 IEEE, IEEE, 5 décembre 2011 (2011-12-05), pages 1-5, XP032118793, DOI: 10.1109/GLOCOM.2011.6133592 ISBN: 978-1-4244-9266-4**
• **MAURICE BELLANGER: "FS-FBMC: An alternative scheme for filter bank based multicarrier transmission", COMMUNICATIONS CONTROL AND SIGNAL PROCESSING (ISCCSP), 2012 5TH INTERNATIONAL SYMPOSIUM ON, IEEE, 2 mai 2012 (2012-05-02), pages 1-4, XP032188167, DOI: 10.1109/ISCCSP.2012.6217776 ISBN: 978-1-4673-0274-6**
• **DA CHEN ET AL: "Novel prototype filter design for FBMC based cognitive radio systems through direct optimization of filter coefficients", WIRELESS COMMUNICATIONS AND SIGNAL PROCESSING (WCSP), 2010 INTERNATIONAL CONFERENCE ON, IEEE, PISCATAWAY, NJ, USA, 21 octobre 2010 (2010-10-21), pages 1-6, XP031799801, ISBN: 978-1-4244-7556-8**

**Description**

**1. Domaine de l'invention**

Le domaine de l'invention est celui des modulations multiporteuses à base de bancs de filtres (en anglais FBMC pour « Filter Bank based MultiCarrier »).

Plus précisément, l'invention concerne le calcul des coefficients du filtre prototype de tels bancs de filtres.

L'invention trouve notamment des applications dans le domaine de la transmission ou du codage de données. En particulier, l'invention trouve des applications dans les systèmes de transmission ou de codage mettant en oeuvre une modulation multiporteuse dite « avancée », comme l'OFDM/OQAM (en anglais « Orthogonal Frequency Division Multiplexing /Offset Quadrature Amplitude Modulation »), le WOFDM (en anglais « Wavelet OFDM ») où l'OFDM suréchantillonné.

**2. Art antérieur**

On décrit ci-après l'art antérieur relatif aux modulations multiporteuses à base de bancs de filtres utilisées dans des systèmes de transmission.

Dans de tels systèmes, les modulations multiporteuses avancées présentent de nombreux avantages par rapport aux modulations OFDM classiques.

Par exemple, par rapport à l'OFDM conventionnel, le fait d'introduire un suréchantillonnage dans la chaîne de modulation permet de relâcher la contrainte d'orthogonalité pour l'ensemble des porteuses du système de transmission et de réaliser la modulation avec des filtres prototypes bien localisés à la fois en temps et fréquence. L'OFDM suréchantillonné est également connu sous l'appellation FMT (« Filtered Multi-Tone » en anglais) pour les transmissions filaires.

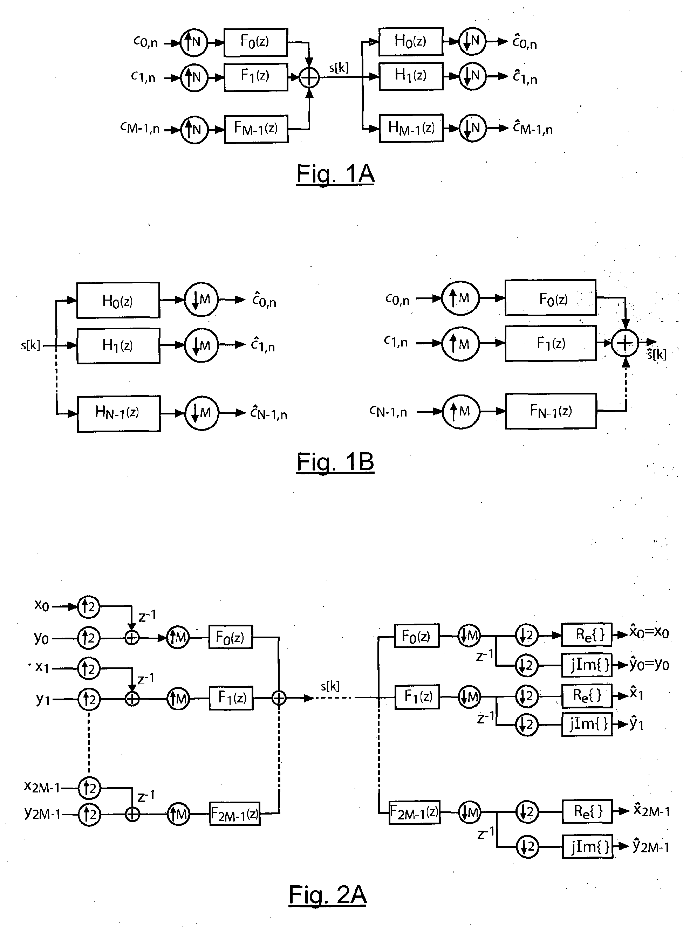

La figure 1A présente un exemple de réalisation d'un modem d'un système de transmission mettant en oeuvre une modulation de type OFDM suréchantillonné/FMT sous forme de bancs de filtres, dans lequel le facteur entier d'expansion N est choisi strictement supérieur au nombre entier de sous-porteuses M. L'appellation « suréchantillonné » provient du fait que le nombre d'échantillons transmis par le signal modulé en bande de base $s[k]$ est supérieur au nombre d'échantillons strictement nécessaire.

Tout comme l'OFDM, l'OFDM suréchantillonné est un système modulé en exponentielle. Ainsi, à l'émission, le modulateur est formé par un banc de filtres de synthèse (SFB pour « Synthesis Filter Bank »), illustré en figure 1A, dans lequel la réponse impulsionnelle de chaque filtre $f_m$, $0 \leq m \leq M - 1$, s'obtient à partir d'un filtre prototype p de longueur L et à coefficients réels :

$$f_m[k] = p[k]e^{j\frac{2\pi mk}{M}}$$

et

$$F_m(z) = \sum_{k=0}^{L-1} f_m[k]z^{-k}$$

Les conditions d'orthogonalité du modem de la figure 1A sont établies en supposant une transmission parfaite, i.e. n'introduisant aucune distorsion. Si ces conditions d'orthogonalité sont réalisées, les symboles complexes estimés en réception $\hat{c}_{m,n}$ seront identiques à ceux transmis $c_{m,n}$ i.e. $\hat{c}_{m,n} = \hat{c}_{m,n} \,\forall m,n$. Ceci impose qu'en réception, le démodulateur illustré en figure 1A soit formé par un banc de filtres d'analyse (AFB pour « Analysis Filter Bank ») modulé comme à l'émission, formant un filtre adapté, dans lequel la réponse impulsionnelle de chaque filtre $g_m$ s'obtient à partir du retourné temporel du filtre prototype p utilisé en émission :

$$g_m[k] = p[L - 1 - k]e^{j\frac{2\pi m(L-1-k)}{M}}$$

Le filtre prototype p doit également satisfaire des propriétés d'orthogonalité pour que la condition $\hat{c}_{m,n} = c_{m,n}$ $\forall m,n$, également dite de reconstruction parfaite, soit satisfaite. Pour un filtre prototype $P(z) = \sum_{n=0}^{L-1} p[n]z^{-n}$, ces conditions de reconstruction parfaite s'écrivent comme suit :

$$\sum_{\nu} p[k + \nu M]\, p[k + \nu M + sN] = \delta_s,\; 0 \le k \le M - 1,\; s \ge 0, \qquad (2)$$

où: $p[n] = 0$ pour $n <$ ou $n \ge L$ ;

$\delta_s$ est le symbole de Kronecker, tel que $\delta_s = 1$ si $s = 0$ et $\delta_s = 0$ si $s \ne 0$ ; et

$k, v$ et $s$ sont des variables entières.

Dans le cas particulier d'un suréchantillonnage par un facteur égal à $\frac{N}{M} = 2,\; N = \Delta N_0,\; M = \Delta M_0,\; M_0 = 1$ et $N_0 = 2$, la condition de reconstruction parfaite donnée par l'équation (2) devient exactement celle des systèmes de modulation OFDM de type Offset-QAM (OFDM/OQAM) ou, toujours de manière équivalente, celle des systèmes dits de bancs modulés en cosinus (CMFB).

D'un point de vue système de transmission, un système de transmission mettant en oeuvre une modulation OFDM/OQAM se distingue du système de transmission mettant en oeuvre une modulation de type OFDM suréchantillonné représenté à la figure 1A en ce que les symboles complexes à transmettre sont décomposés en leur partie réelle et imaginaire, et que chacune d'entre elle est transmise avec un décalage d'un demi-temps symbole.

En exploitant la dualité entre les systèmes de type transmultiplexeur comme celui de la figure 1A, où le banc de filtres de synthèse est placé à l'émission et le banc de filtres d'analyse à la réception, et des systèmes comme celui de la figure 1B, où au contraire le banc de filtres d'analyse est placé à l'émission et le banc de filtres de synthèse à la réception, on obtient des systèmes dits de codage en sous-bande qui, sous la forme modulée, en réels ou en complexe, peuvent s'appliquer en codage audio ainsi qu'en codage d'image et de vidéo.

Un grand nombre de techniques permettant de déterminer les coefficients des filtres prototypes pour des systèmes de type bancs de filtres modulés a déjà été présenté, notamment pour des filtres prototypes dont la longueur est un multiple de N supérieur à 2 (où N correspond au facteur d'expansion/décimation ou au nombre de porteuse/bandes selon le type de système).

En particulier, ainsi qu'il a été démontré dans le document « Analysis and design of OFDM/OQAM systems based on filterbank theory » P. Siohan, C. Siclet, et N. Lacaille, IEEE Transactions on Signal Processing, vol. 50, no. 5, pp. 1170-1183, mai 2002, le fait de limiter la taille des filtres à des supports temporels très courts est très pénalisant pour les méthodes de calcul qui déduisent les coefficients discrets $p[n]$ à partir de solutions dérivées de fonctions en temps continu, en les tronquant et en les discrétisant.

Il est donc préférable de calculer directement les L valeurs discrètes de la réponse impulsionnelle du filtre prototype, où L égal N. De ce fait, si N est élevé, ce qui est notamment le cas pour des systèmes comprenant plusieurs milliers de porteuses, il en résulte un problème d'optimisation très complexe à résoudre du fait du nombre très élevé de variables.

Les inventeurs de la présente demande de brevet ont proposé, dans le document « Perfect reconstruction conditions and design of oversampled DFT-modulated transmultiplexers » de C. Siclet, P. Siohan, et D. Pinchon (EURASIP J. Appl. Sig. Proc., pp. 1-14, 2006, article ID 15756) une technique de détermination des coefficients d'un filtre prototype pour système de type bancs de filtres modulés, consistant à trouver les angles satisfaisant l'équation (2), en utilisant des propriétés de régularités des angles.

Cette technique permet de déterminer de bons filtres prototype, mais est très coûteuse en termes de calculs.

Les inventeurs de la présente demande de brevet ont par ailleurs proposé, dans le document « Closed form expression of optimal short PR FMT prototype filters », Proceedings Globecom'11 (Houston, USA), Dec. 2011, une technique de détermination des coefficients d'un filtre prototype pour système de type bancs de filtres modulés permettant d'obtenir une solution analytique satisfaisant au moins un critère d'optimisation (localisation temps/fréquence par exemple).

Un inconvénient de la technique proposée est qu'elle ne s'applique qu'aux systèmes FMT tels que $2 \le M_0 \le 20$. De plus, elle ne permet d'obtenir des filtres prototypes bien localisés que pour des valeurs de $\Delta$ comprises entre 4 à 40.

Or pour des systèmes de transmission, ces contraintes ne permettent pas de couvrir le cas où le nombre de sous-porteuses est de plusieurs milliers. En effet, en considérant un cas extrême (mais aussi réaliste) où le rapport de suréchantillonnage serait de 21/20, le nombre maximum de sous-porteuses ne pourrait pas dépasser 800 selon la technique présentée dans ce document.

A l'inverse, dans le cas d'applications de type codage en sous-bandes où, pour l'image et la vidéo, le nombre de sous-bandes est en général très limité, la valeur de $\Delta$ (qui est au minimum de 4 selon ce document) est alors parfois trop élevée.

## 3. Exposé de l'invention

L'invention propose une solution nouvelle qui ne présente pas l'ensemble de ces inconvénients de l'art antérieur, sous la forme d'un procédé de détermination d'au moins un filtre d'un banc de filtres d'un système de transmission ou de codage, à partir d'un filtre prototype p.

Selon l'invention, le procédé comprend une étape de détermination des coefficients *p[k]* du filtre prototype p, de longueur L égale N, à partir de $\Delta$ paramètres angulaires $\theta_i$, pour $0 \leq i \leq \Delta$ - 1 et $\Delta = N/M$ un entier relatif ($\Delta$ étant le plus grand commun diviseur entre N et M), exprimés à partir d'une fonction polynomiale *f(x)*, encore appelée représentation compacte, telle que :

$$f(x) = \frac{\pi}{4} + t \sum_{k=0}^{d-1} \beta_k T_{2k}(t)$$

$$t = 2x - 1$$

avec :

- $T_n(t)$ le polynôme de Chebyshev de degré n ;
- d le degré de la représentation compacte ;
- $\beta_k$ les paramètres de la représentation compacte ;
- $\theta_i = f(x_i)$ avec $x_i = \frac{2i+1}{2\Delta}$ ;
- $p[i] = \cos\theta_i$, $p[M + i] = \sin\theta_i$, pour $0 \leq i \leq \Delta$ - 1 ;
- $p[k] = 1$, $\Delta \leq k \leq M$ - 1;
- M et N des entiers relatifs représentatifs du système de transmission ou de codage.

L'invention propose ainsi une nouvelle solution pour la détermination des filtres d'un banc de filtres d'un système de transmission ou de codage, et plus précisément pour la détermination des coefficients du filtre prototype, notamment lorsque ce filtre prototype est court (L=N).

Pour ce faire, on considère une représentation compacte particulière permettant d'exprimer les $\Delta$ paramètres angulaires $\theta_i$, satisfaisant l'équation (2), sous forme de polynôme. Comme un degré de la fonction polynomiale relativement faible par rapport à $\Delta$ suffit à produire une bonne approximation des valeurs des angles optimaux, la représentation compacte permet de réduire le temps d'optimisation lorsque l'optimisation s'effectue non pas par rapport aux angles $\theta_i$ mais par rapport aux coefficients du polynôme de f(x).

En particulier, cette représentation compacte tient compte de la linéarité de phase du prototype *p[n] = p[L* - 1 - *n]* et de la relation de symétrie des angles. La représentation compacte proposée selon l'invention s'écrit donc uniquement avec des polynômes de degré pair.

Encore plus précisément, dans le cas particulier des filtres prototypes courts (L=N), chaque composante polyphase $P_i(z)$ du filtre prototype ne fait intervenir qu'un seul angle et la condition de phase linéaire du prototype se traduit par $\theta_{M_0,\Delta,i} = \frac{\pi}{2} - \theta_{M_0,\Delta,\Delta-1-i}$.

Selon l'invention, on considère également un rapport de suréchantillonnage le plus faible possible, ce qui signifie que l'invention permet d'atteindre, en théorie, des efficacités spectrales comparables à celle du CP-OFDM mais avec des formes d'onde bien localisées en temps et en fréquence. Plus précisément, nous ne considérons ici que des facteurs de suréchantillonnage $\frac{N}{M}$ tels que $\frac{N}{M} = \frac{N_0}{M_0}$, avec $N = \Delta N_0$, $M = \Delta M_0$, où $\Delta$ est un entier strictement positif, et l'on impose $N_0 = M_0 + 1$.

La solution proposée permet donc de calculer de manière rapide les coefficients du filtre prototype, et par suite les coefficients des filtres des bancs de filtres, notamment en cas de changement d'un des paramètres du système de transmission ou de codage (comme le nombre de porteuses ou de sous-bandes utilisées par exemple). Elle est donc particulièrement avantageuse dans un contexte de mobilité.

Elle s'applique en particulier aux systèmes de transmission de type FMT (filaires) ou OFDM-suréchantillonné (radio), ainsi qu'à d'autres systèmes de transmission connus soit en radio (transrécepteur de type CMFB par exemple), soit en filaire (systèmes de type xDSL avec le DWMT (en anglais « Discrete Wavelet MultiTone ») ou encore de type PLC avec le WOFDM).

Selon une caractéristique particulière de l'invention, le procédé comprend une étape d'estimation des paramètres $\beta_k$ de la représentation compacte, mettant en oeuvre au moins un algorithme de type régression linéaire.

Cette estimation permet de déterminer une expression analytique relativement simple pour chacun des paramètres $\beta_k$ de la représentation compacte.

Selon un premier mode de réalisation de l'invention, le degré d de la représentation compacte est égal à 2, et l'étape d'estimation délivre une estimation des paramètres $\beta_0$ et $\beta_1$ de la représentation compacte, telle que, en posant :

$$\gamma_0(M_0, \Delta) = \frac{\pi}{4} + \beta_0(M_0, \Delta) + \beta_1(M_0, \Delta)$$

on obtient les estimations suivantes :

$$\tilde{\beta}_1(M_0, \Delta, X) = \frac{X_0}{(X_1 + M_0)^2} + \frac{X_2}{\Delta(X_2 + M_0)^2},$$

$$\tilde{\gamma}_0(M_0, \Delta, X) = \left[ X_4 + \frac{X_5}{(X_6 + M_0)^2} + \Delta(X_7 + \frac{X_8}{(X_9 + M_0)^2}) \right]^{-1}.$$

où X = ($X_i$, i = 0,...,9) sont des constantes et M = $\Delta M_0$.

En particulier, le procédé comprend une étape de raffinement des constantes X, mettant en oeuvre une minimisation de la fonction de coût J(X) suivante, pour différentes valeurs de $M_0$ et $\Delta$, telles que $M_0 \in \mathcal{M}_I$, où $\mathcal{M}_I = \left[ M_0^{min}, M_0^{max} \right]$, et $\Delta \in \mathcal{D}_I$, où $\mathcal{D}_I = \left[ \Delta^{min}, \Delta^{max} \right]$ :

$$J(X) = \sum_{M_0 \in \mathcal{M}_I} \sum_{\Delta \in \mathcal{D}_I} \left[ \beta_1(M_0, \Delta) - \tilde{\beta}_1(M_0, \Delta, X) \right]^2 + \left[ \gamma_0(M_0, \Delta) - \tilde{\gamma}_0(M_0, \Delta, X) \right]^2$$

Selon ce premier mode de réalisation, les $\Delta$ paramètres angulaires $\theta_i$, pour $0 \le i \le \Delta - 1$, s'expriment sous la forme suivante :

$$\theta_i = f(x_i) = \frac{\pi}{2}(1 - x_i) + (2x_i - 1)\left[ \frac{1}{c(M_0) + d(M_0)\Delta} + 2[(2x_i - 1)^2 - 1]\left[ a(M_0) + \frac{b(M_0)}{\Delta} \right] \right]$$

où $x_i = \frac{2i+1}{2\Delta}$ et :

$$a(M_0) = \frac{X_0}{(X_1 + M_0)^2}$$

,

$$b(M_0) = \frac{X_2}{(X_3 + M_0)^2}$$

$$c(M_0) = X_4 + \frac{X_5}{(M_0 + X_6)^2}$$

$$d(M_0) = X_7 + \frac{X_8}{(M_0 + X_9)^2}$$

Selon un deuxième mode de réalisation, le degré d de la représentation compacte est égal à 3, et l'étape d'estimation délivre une estimation des paramètres $\beta_0$, $\beta_1$ et $\beta_2$ de la représentation compacte, telle que, en posant :

$$\gamma_0(M_0, \Delta) = \frac{\pi}{4} + \beta_0(M_0, \Delta) + \beta_1(M_0, \Delta) + \beta_2(M_0, \Delta)$$

on obtient les estimations suivantes :

$$\hat{\gamma}_0(M_0, \Delta, X) = \frac{1}{X_{M_0,0} + X_{M_0,1}\Delta}$$

$$\hat{\beta}_1(M_0, \Delta, X) = X_{M_0,2} + \frac{1}{X_{M_0,3} + X_{M_0,4}\Delta}$$

$$\hat{\beta}_2(M_0, \Delta, X) = X_{M_0,5} + \frac{1}{X_{M_0,6} + X_{M_0,7}\Delta}$$

où $X = (X_{M_0,i}, i = 0,...,7)$ sont des constantes et $M = \Delta M_0$.

En particulier, le procédé comprend une étape de raffinement des constantes $X$, délivrant des constantes raffinées $\hat{X} = (\hat{X}_{M_0,i}, i = 0,...,7)$, mettant en oeuvre une minimisation de la fonction de coût J(X) suivante, pour différentes valeurs de $\Delta$, telles que $\Delta \in \mathcal{D}_I$, où $\mathcal{D}_I = [\Delta^{min}, \Delta^{max}]$ :

$$J(X) = \sum_{\Delta \in \mathcal{D}_I} \left\{ [\gamma_0(M_0, \Delta) - \hat{\gamma}_0(M_0, \Delta, X)]^2 + [\beta_1(M_0, \Delta) - \hat{\beta}_1(M_0, \Delta, X)]^2 \right.$$
$$\left. + [\beta_2(M_0, \Delta) - \hat{\beta}_2(M_0, \Delta, X)]^2 \right.$$

Selon ce deuxième mode de réalisation, les $\Delta$ paramètres angulaires $\theta_i$, pour $0 \leq i \leq \Delta - 1$, s'expriment sous la forme suivante :

$$\theta_i = f(x_i) = \frac{\pi}{2}(1 - x_i) + \frac{2x_i - 1}{\hat{X}_{M_0,0} + \hat{X}_{M_0,1}\Delta} + 8x_i(2x_i^2 - 3x_i + 1)$$
$$\times \left[ \hat{X}_{M_0,2} + \frac{1}{\hat{X}_{M_0,3} + \hat{X}_{M_0,4}\Delta} + 4\left( \hat{X}_{M_0,5} + \frac{1}{\hat{X}_{M_0,6} + \hat{X}_{M_0,7}\Delta} \right)(2x_i - 1)^2 \right]$$

où $x_i = \frac{2i+1}{2\Delta}$.

Selon un premier exemple d'application, le système de transmission ou de codage est de type OFDM suréchantillonné (encore appelé FMT), mettant en oeuvre un facteur de suréchantillonnage $\frac{N}{M}$ tel que $N > M$, avec $N = \Delta N_0$, $M = \Delta M_0$, $N_0 = M_0 + 1$, et dans lequel :

- pour un système de transmission : M représente le nombre de sous-porteuses et N le facteur d'expansion ou de décimation, ou
- pour un système de codage : M représente le facteur d'expansion ou de décimation et N le nombre de sous-bandes.

Selon un deuxième exemple d'application, le système de transmission est de type OFDM/OQAM (encore appelé MDFT ou « Modified Discrete FourierTransform » en anglais) ou, de manière duale, le système est de type banc de filtres modulé en cosinus, tel que $N = 2M$, et dans lequel :

- pour un système de transmission : M représente le facteur d'expansion ou de décimation et N le nombre de sous-porteuses, ou
- pour un système de codage : M le facteur d'expansion ou de décimation et N représente le nombre de sous-bandes.

Selon un troisième exemple d'application, le système de transmission est de type WOFDM ou, de manière duale, le système est de type banc de filtres modulé en cosinus, tel que $N = 2M,$ dans lequel :

- pour un système de transmission : M représente le facteur d'expansion ou de décimation et le nombre de sous-porteuses, ou
- pour un système de codage : M représente le facteur d'expansion ou de décimation et le nombre de sous-bandes.

Dans un autre mode de réalisation, l'invention concerne un dispositif de détermination d'au moins un filtre d'un banc de filtres d'un système de transmission ou de codage, à partir d'un filtre prototype p.

Selon l'invention, un tel dispositif comprend un module de détermination des coefficients $p[k]$ du filtre prototype p, de longueur L égale N, utilisant $\Delta$ paramètres angulaires $\theta_i$, pour $0 \leq i \leq \Delta$ - 1 et $\Delta = N/M$ un entier relatif, exprimés à partir d'une fonction polynomiale $f(x)$, encore appelée représentation compacte, telle que :

$$f(x) = \frac{\pi}{4} + t \sum_{k=0}^{d-1} \beta_k T_{2k}(t)$$

$$t = 2x - 1$$

en reprenant les notations définies ci-dessus.

Un tel dispositif est notamment adapté à mettre en oeuvre le procédé décrit précédemment. Il s'agit par exemple d'un transmultiplexeur, d'un transrécepteur ou encore d'un codeur en sous-bandes. Ce dispositif pourra bien sûr comporter les différentes caractéristiques relatives au procédé de détermination d'au moins un filtre d'un banc de filtres d'un système de transmission ou de codage selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

Dans un autre mode de réalisation, l'invention concerne un programme d'ordinateur comportant des instructions pour la mise en oeuvre d'un procédé de détermination d'au moins un filtre d'un banc de filtres tel que décrit précédemment lorsque ce programme est exécuté par un processeur.

Le procédé selon l'invention peut donc être mis en oeuvre de diverses manières, notamment sous forme câblée ou sous forme logicielle.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1A et 1B illustrent un premier exemple d'un système de transmission et d'un système de codage respectivement, de type OFDM suréchantillonné, dans lequel au moins un filtre du banc de filtres a été déterminé selon un mode de réalisation de l'invention ;
- les figures 2A et 2B illustrent un deuxième exemple d'un système de transmission et d'un système de codage respectivement, de type OFDM/OQAM, dans lequel au moins un filtre du banc de filtres a été déterminé selon un mode de réalisation de l'invention ;
- les figures 3A et 3B illustrent un troisième exemple d'un système de transmission et d'un système de codage respectivement, de type WOFDM, dans lequel au moins un filtre du banc de filtres a été déterminé selon un mode de réalisation de l'invention ;

- la figure 4 présente les variations des angles optimaux en fonction d'un indice $i$ ;
- les figures 5A à 5D illustrent les valeurs de l'erreur relative $\xi^{(d)}(M_0,\Delta)$ pour différentes valeurs de $M_0$ ;
- la figure 6 présente la structure d'un dispositif mettant en oeuvre une technique de détermination des coefficients d'au moins un filtre d'un banc de filtres selon un mode de réalisation particulier de l'invention.

## 5. Description d'un mode de réalisation de l'invention

### 5.1 Principe général

Le principe général de l'invention repose sur une solution analytique pour la détermination des coefficients d'un filtre prototype p, permettant de calculer de manière simple, rapide et efficace les coefficients d'un tel filtre prototype, et par suite les coefficients d'au moins un filtre d'un banc de filtres modulés.

En particulier, un tel filtre prototype doit satisfaire des contraintes d'orthogonalité pour que la condition de reconstruction parfaite soit satisfaite.

Pour ce faire, on utilise une représentation particulière des angles $\theta_i$, encore appelée représentation compacte, permettant de satisfaire la condition de reconstruction parfaite en utilisant des propriétés de régularités des angles, comme présenté dans le document « *Perfect reconstruction conditions and design of oversampled DFT-modulated transmultiplexers* » précité. En particulier, cette représentation compacte selon l'invention tient compte de la linéarité de phase du prototype $p[n] = p[L - 1 - n]$ et de la relation de symétrie des angles.

Encore plus précisément, on propose selon l'invention d'exprimer la représentation compacte non pas par rapport aux angles $\theta_i$, mais par rapport aux coefficients d'un polynôme $f(x)$, ce qui permet de réduire le temps d'optimisation, c'est-à-dire le temps de détermination des coefficients du filtre prototype permettant d'approcher au plus près les conditions de reconstruction parfaite.

Ainsi, les coefficients $p[k]$ du filtre prototype p, de longueur L égale N, sont déterminés à partir de $\Delta$ paramètres angulaires $\theta_i$, pour $0 \leq i \leq \Delta - 1$ et $\Delta = N/M$, exprimés à partir de la fonction polynomiale $f(x)$ telle que :

$$f(x) = \frac{\pi}{4} + t \sum_{k=0}^{d-1} \beta_k T_{2k}(t)$$

$$t = 2x - 1$$

avec :

- $T_n(t)$ le polynôme de Chebyshev de degré n ;
- d le degré de la représentation compacte ;
- $\beta_k$ les paramètres de la représentation compacte;
- $\theta_i = f(x_i)$ avec $x_i = \frac{2i+1}{2\Delta}$ ;
- $p[i] = \cos\theta_i$, $p[M + i] = \sin\theta_i$, pour $0 \leq i \leq \Delta - 1$ ;
- $p[k] = 1$, $\Delta \leq k \leq M - 1$ ;
- M et N des entiers relatifs représentatifs du système de transmission ou de codage.

On s'intéresse donc, selon l'invention, à la détermination des coefficients $p[n]$ du filtre prototype dans le cas particulier où sa longueur est la plus courte possible mais également suffisante pour obtenir une forme d'onde autre que celle rectangulaire utilisée dans l'OFDM conventionnel (L=N). Ceci permet notamment de réduire la complexité opératoire des systèmes.

Dans ce cas particulier, les composantes polyphases d'ordre $\Delta$ du filtre prototype sont de longueur la plus faible possible, c'est-à-dire $N_0$. On considère donc selon l'invention un filtre prototype dont la transformée en z s'exprime sous la forme suivante :

$$P(z) = \sum_{k=0}^{L-1} p[k]z^{-k} = \sum_{i=0}^{\Delta-1} z^{-i} P_i(z^\Delta).$$

avec $P_i(z^\Delta)$ de longueur $L_0 = N_0$.

En particulier, selon un premier exemple d'application, dans lequel le système de transmission ou de codage est de type OFDM suréchantillonné, mettant en oeuvre un facteur de suréchantillonnage $\frac{N}{M}$ tel que N > M, avec $N = \Delta N_0$, $M = \Delta M_0$, $N_0 = M_0 + 1$, M représente le nombre de sous-porteuses et N le facteur d'expansion ou de décimation pour un système de transmission, et M représente le facteur d'expansion ou de décimation et N le nombre de sous-bandes pour un système de codage. Un tel système de transmission ou de codage, déjà décrit en relation avec l'art antérieur, est illustré en figures 1A et 1B.

Si l'on considère le transmultiplexeur de type OFDM suréchantillonné de la figure 1A, utilisant un filtre prototype p orthogonal et à phase linéaire de longueur $L = N > 2M$, et du fait de la linéarité de phase du prototype $p[n] = p[L - 1 - n]$, les coefficients d'au moins un filtre de synthèse ou d'analyse s'expriment sous la forme suivante :

$$f_m[k] = K_1 p[k] e^{j\frac{2\pi mk}{M}}$$

avec : $K_1$ un facteur multiplicatif pouvant être différent suivant les systèmes pour satisfaire la condition de reconstruction parfaite ; et

$$0 \le m \le M - 1, 0 \le n \le N - 1 \; et \; 0 \le k \le L - 1.$$

De manière duale, si l'on considère le banc de filtres de la figure 1B, les coefficients d'au moins un filtre de synthèse ou d'analyse s'expriment sous la forme suivante :

$$f_n[k] = K_2 p[k] e^{j\frac{2\pi nk}{N}}$$

avec : $K_2$ un facteur multiplicatif pouvant être différent suivant les systèmes pour satisfaire la condition de reconstruction parfaite.

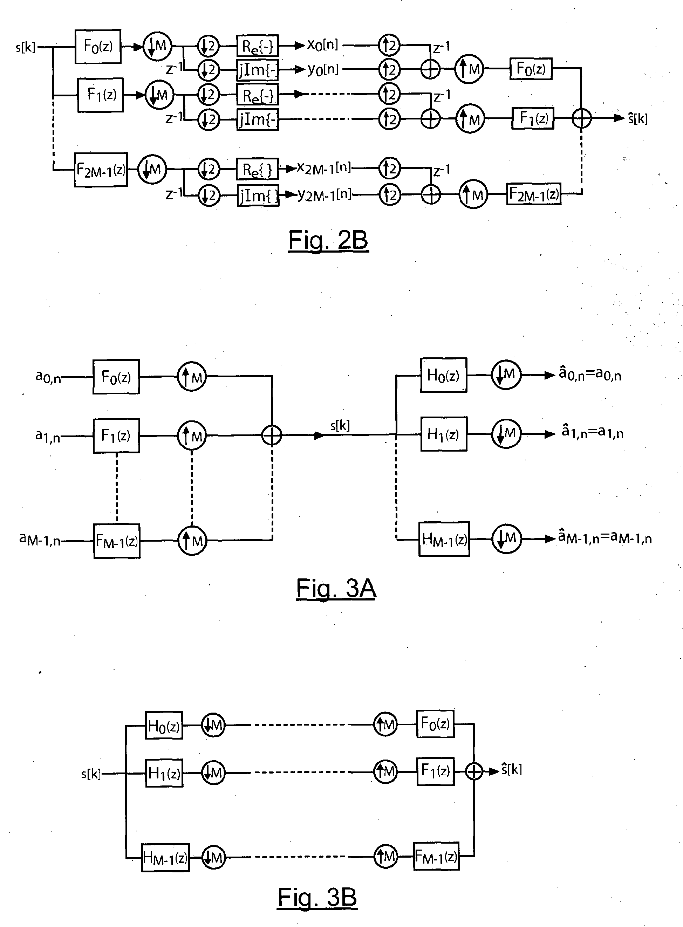

Selon un deuxième exemple d'application, dans lequel le système de transmission ou de codage est de type MDFT, tel que $N = 2M$, M représente le facteur d'expansion ou de décimation et N le nombre de sous-porteuses ou de sous-bandes. Un tel système de transmission ou de codage est illustré en figures 2A et 2B.

Si l'on considère le transmultiplexeur TMUX de la figure 2A, de type MDFT, utilisant un filtre prototype p orthogonal et à phase linéaire de longueur $L = N = 2M,$ et du fait de la linéarité de phase du prototype $p[n] = p[L - 1 - n]$, les coefficients d'au moins un filtre de synthèse ou d'analyse s'expriment sous la forme suivante :

$$f_m[k] = K_3 p[k] e^{j\frac{2\pi mk}{2M}}$$

avec : $K_3$ un facteur multiplicatif pouvant être différent suivant les systèmes pour satisfaire la condition de reconstruction parfaite ; et

$$0 \le m \le M - 1, 0 \le n \le N - 1 \; et \; 0 \le k \le L - 1.$$

De manière duale, si l'on considère le banc de filtres MDFT de la figure 2B, les coefficients d'au moins un filtre de synthèse ou d'analyse s'expriment sous la forme suivante :

$$f_m[k] = K_4 p[k] e^{j\frac{2\pi mk}{2M}}$$

avec : $K_4$ un facteur multiplicatif pouvant être différent suivant les systèmes pour satisfaire la condition de reconstruction parfaite.

Selon un troisième exemple d'application, dans lequel le système de transmission ou de codage est de type WOFDM, M représente le facteur d'expansion ou de décimation et le nombre de sous-porteuses, ou de sous-bandes. Un tel système de transmission ou de codage est illustré en figures 3A et 3B.

Si l'on considère le transmultiplexeur WOFDM (ou DWMT) de la figure 3A, utilisant un filtre prototype p orthogonal et à phase linéaire de longueur $L = N = 2M$, et du fait de la linéarité de phase du prototype $p[n] = p[L - 1 - n]$, les coefficients d'au moins un filtre de synthèse s'expriment sous la forme suivante :

$$f_m[k] = K_5 p[k] \cos\left[\frac{\pi}{M}\left(m + \frac{1}{2}\right)\left(k + \frac{M+1}{2}\right)\right]$$

et les coefficients d'au moins un filtre d'analyse s'expriment de la même façon :

$$h_m[k] = f_m[k]$$

avec : $K_5$ un facteur multiplicatif pouvant être différent suivant les systèmes pour satisfaire la condition de reconstruction parfaite ; et

$$0 \leq m \leq M - 1, 0 \leq n \leq N - 1 \ et \ 0 \leq k \leq L - 1.$$

De manière duale, si l'on considère le banc de filtres modulé en cosinus de la figure 3B, les coefficients d'au moins un filtre d'analyse s'expriment sous la forme suivante :

$$h_m[k] = K_6 p[k] \cos\left[\frac{\pi}{M}\left(m + \frac{1}{2}\right)\left(k + \frac{M+1}{2}\right)\right]$$

et les coefficients d'au moins un filtre de synthèse s'expriment de la même façon:

$$f_m[k] = h_m[k]$$

avec : $K_6$ un facteur multiplicatif pouvant être différent suivant les systèmes pour satisfaire la condition de reconstruction parfaite.

*5.2 Détermination des paramètres $\beta_k$*

Selon l'invention, les paramètres $\beta_k$ de la représentation compacte sont estimés, en tenant notamment compte du degré d de la représentation compacte. On considère pour ce faire différentes valeurs de $M_0$ et $\Delta$, telles que $M_0 \in \mathcal{M}_I$, où $\mathcal{M}_I = \left[M_0^{min}, M_0^{max}\right]$, et $\Delta \in \mathcal{D}_I$, où $\mathcal{D}_I = \left[\Delta^{min}, \Delta^{max}\right]$.

*5.2.1 Exemple de détermination des paramètres $\beta_k$ pour un degré égal à 2*

On considère un premier mode de réalisation de l'invention, selon lequel le degré de la représentation compacte est égal à 2. Dans ce cas, on cherche à déterminer des estimations des deux paramètres $\beta_0(M_0,\Delta)$ et $\beta_1(M_0,\Delta)$ de la représentation compacte.
On présente ci-après un exemple d'algorithme permettant d'estimer ces paramètres.
Au cours d'une première étape, on effectue un changement de variable. Le couple à estimer/« approximer » devient $(\gamma_0(M_0,\Delta), \beta_1(M_0,\Delta))$, avec $\gamma_0(M_0, \Delta) = \frac{\pi}{4} + \beta_0(M_0, \Delta) + \beta_1(M_0,\Delta)$.
Au cours d'une deuxième étape, on détermine une expression analytique approchée pour $\beta_1(M_0,\Delta)$, avec $M_0 \in \mathcal{M}_I$ :

- étape 2a : séparation des variables en approximant $\beta_1(M_0,\Delta)$ par $\beta_1(M_0,\Delta) \cong a(M_0) + b(M_0)/\Delta$;
- étape 2b : calcul numérique, par régression linéaire en $1/\Delta$, de $a(M_0)$ et $b(M_0)$ pour chaque $M_0 \in \mathcal{M}_I$, que l'on note $a$ et $b$ ci-dessous :

$$\min_{a,b} \sum_{\Delta \in \mathcal{D}_I} \left[ \beta_1(M_0, \Delta) - \left( a + \frac{b}{\Delta} \right) \right]^2$$

- étape 2c : recherche pour $M_0 \in \mathcal{M}_I$ d'une expression analytique de $a(M_0)$ et $b(M_0)$ sous la forme $\frac{1}{\sqrt{a(M_0)}} = A + BM_0$ et $\frac{1}{\sqrt{b(M_0)}} = C + DM_0$ ;

- étape 2d : calcul des coefficients A, B puis C et D par régression linéaire en $M_0$ sur les expressions précédentes ;
- étape 2e : obtention des expressions de $a(M_0)$ et $b(M_0)$ sous la forme :

$$a(M_0) = \frac{X_0}{(X_1 + M_0)^2}, \quad b(M_0) = \frac{X_2}{(X_3 + M_0)^2},$$

avec

$$X_0 = \frac{1}{B^2}; \quad X_1 = \frac{A}{B}.$$

Au cours d'une troisième étape, on détermine une expression analytique approchée pour $\gamma_0(M_0,\Delta)$:

- étape 3a : séparation des variables en approximant $1/\gamma_0(M_0,\Delta)$ par $1/\gamma_0(M_0,\Delta) \cong c(M_0) + d(M_0)/\Delta$ ;
- étape 3b : calcul numérique, par régression linéaire en $\Delta$, de $c(M_0)$ et $d(M_0)$ pour chaque $M_0 \in \mathcal{M}_I$, que l'on note $c$ et $d$ ci-dessous :

$$\min_{c,d} \sum_{\Delta \in \mathcal{D}_I} \left[ \gamma_0(M_0, \Delta) - (c + d\Delta) \right]^2 .$$

- étape 3c: recherche pour $M_0 \in \mathcal{M}_I$ d'une expression analytique de $c(M_0)$ et $d(M_0)$ sous la forme $\frac{1}{\sqrt{c(M_0)-X_4}} = E + FM_0$ et $\frac{1}{\sqrt{d(M_0)-X_7}} = G + HM_0$, avec $X_4 = 1{,}273$ et $X_7 = 1{,}273$ choisis pour obtenir un comportement linéaire, en effectuant une recherche par dichotomie ;
- étape 3d : calcul des coefficients E, F puis G et H par régression linéaire en $M_0$ sur les expressions précédentes;
- étape 3e : obtention des expressions de $c(M_0)$ et $d(M_0)$ sous la forme :

$$c(M_0) = X_4 + \frac{X_5}{(M_0 + X_6)^2}, \quad d(M_0) = X_7 + \frac{X_8}{(M_0 + X_9)^2},$$

avec

$$X_5 = \frac{1}{F^2}; \quad X_6 = \frac{E}{F}; \quad X_8 = \frac{1}{H^2}; \quad X_9 = \frac{G}{H}.$$

A l'issue des deuxième et troisième étapes, les paramètres $\gamma_0(M_0,\Delta)$ et $\beta_1(M_0,\Delta)$ sont donc approchés par :

$$\tilde{\beta}_1(M_0, \Delta, X) = \frac{X_0}{(X_1 + M_0)^2} + \frac{X_2}{\Delta(X_3 + M_0)^2},$$

$$\tilde{\gamma}_0(M_0,\Delta,X) = \left[X_4 + \frac{X_5}{(X_6 + M_0)^2} + \Delta(X_7 + \frac{X_8}{(X_9 + M_0)^2})\right]^{-1}$$

où $X = (X_i, i = 0,...,9)$ sont des constantes et M = $\Delta M_0$.

A titre d'exemple, on obtient les valeurs suivantes pour les constantes $X_i$ :

| $i$ | $X_i$ |
|---|---|
| 0 | 0.1661777716145 |
| 1 | 0.1634990989807 |
| 2 | 0.3258549559822 |
| 3 | 0.2390449170014 |
| 4 | 1.273 |
| 5 | 2.0810388120457 |
| 6 | 0.2841780420036 |
| 7 | 1.273 |
| 8 | 0.5158085861520 |
| 9 | 1.9338656113891 |

Au cours d'une quatrième étape, on détermine des valeurs raffinées des 9 constantes $X_i$, par une technique d'optimisation globale prenant comme point de départ les valeurs des constantes $X_i$ obtenues à l'issue des étapes précédentes. En d'autres termes, on cherche à minimiser la fonction de coût J(X) suivante, pour différentes valeurs de $M_0$ et $\Delta$ :

$$J(X) = \sum_{M_0 \in M_i}\sum_{\Delta \in D_i}\left[\beta_1(M_0,\Delta) - \tilde{\beta}_1(M_0,\Delta,X)\right]^2 + \left[\gamma_0(M_0,\Delta) - \tilde{\gamma}_0(M_0,\Delta,X)\right]^2$$

En reprenant l'exemple ci-dessus, on obtient les valeurs suivantes pour les constantes après raffinement, notées $\hat{X}_i$ :

| $i$ | $\hat{X}_i$ |
|---|---|
| 0 | 0.19403124832632 |
| 1 | 0.40864162382945 |
| 2 | 0.35329881606485 |
| 3 | 0.39920459787503 |
| 4 | 1.27060234434206 |
| 5 | 2.90492587969539 |
| 6 | 0.86264166373416 |
| 7 | 1.27240200581068 |
| 8 | 0.51760983875876 |
| 9 | 0.52820298059447 |

Les $\Delta$ paramètres angulaires $\theta_i$ permettant de satisfaire la condition de reconstruction parfaite, pour $0 \leq i \leq \Delta - 1$, peuvent alors s'exprimer sous la forme suivante :

$$\theta_i = f(x_i) = \frac{\pi}{2}(1 - x_i) + (2x_i - 1)\left[\frac{1}{c(M_0) + d(M_0)\Delta} + 2[(2x_i - 1)^2 - 1]\left[a(M_0) + \frac{b(M_0)}{\Delta}\right]\right]$$

où $x_i = \frac{2i+1}{2\Delta}$, et on peut en déduire les coefficients du filtre prototype p, tels que :

- $p[i] = \cos\theta_i$, $p[M + i] = \sin\theta_i$, pour $0 \le i \le \Delta - 1$ ;
- $p[k] = 1$, $\Delta \le k \le M - 1$.

*5.2.2 Exemple de détermination des paramètres $\beta_k$ pour un degré égal à 3*

On considère un deuxième mode de réalisation de l'invention, selon lequel le degré de la représentation compacte est égal à 3. Dans ce cas, on cherche à déterminer des estimations des trois paramètres $\beta_0(M_0,\Delta)$, $\beta_1(M_0,\Delta)$ et $\beta_2(M_0,\Delta)$ de la représentation compacte.

On présente ci-après un exemple d'algorithme permettant d'estimer ces paramètres. Une différence par rapport au premier mode de réalisation ($d = 2$) est qu'une solution est proposée pour chaque valeur individuelle de $M_0$ dans l'intervalle [1,4]. On rappelle que le cas particulier $M_0 = 1$ produit à la fois une solution pour un système de type OFDM suréchantillonné mettant en oeuvre un facteur de suréchantillonnage égal à 2 et pour un système OFDM/OQAM.

Au cours d'une première étape, on effectue un changement de variable. Les paramètres à estimer/«approximer» deviennent $\gamma_0(M_0,\Delta), \beta_1(M_0,\Delta), \beta_2(M_0,\Delta)$, avec $\gamma_0(M_0,\Delta) = \frac{\pi}{4} + \beta_0(M_0,\Delta) + \beta_1(M_0,\Delta) + \beta_2(M_0,\Delta)$

Au cours d'une deuxième étape, on détermine une expression analytique approchée pour $\gamma_0(M_0,\Delta)$ :

- étape 2a : séparation des variables en approximant $1/\gamma_0(M_0,\Delta)$ par $1/\gamma_0(M_0,\Delta) \cong X_{M_0,0} + X_{M_0,1}\Delta$ ;
- étape 2b : calcul numérique, par régression linéaire en $\Delta$, pour chaque valeur de $M_0$ dans l'intervalle [1,4], des variables $X_{M_0,i}$, avec $i = 0,1$, en utilisant des variables intermédiaires comme décrit dans le premier mode de réalisation ($d=2$).

Au cours d'une troisième étape, on détermine une expression analytique approchée pour $\beta_1(M_0,\Delta)$ :

- étape 3a : calcul des coefficients de régression linéaire en $\Delta$ pour l'expression $1/(X_{M_0,2} - \beta_1(M_0,\Delta))$ où les constantes $X_{M_0,2}$ peuvent être obtenues par dichotomie ;
- étape 3b : obtention, pour chaque valeur de $M_0$ dans l'intervalle [1,4], en utilisant des variables intermédiaires comme décrit dans le premier mode de réalisation ($d=2$), des coefficients de régression $X_{M_0,3}$ et $X_{M_0,4}$ ;
- étape 3c : calcul, par régression linéaire, pour chaque valeur de $M_0$ dans l'intervalle [1,4], des variables $X_{M_0,i}$ avec $i = 0,1$, en utilisant des variables intermédiaires comme décrit dans le premier mode de réalisation ($d=2$) ;

Au cours d'une quatrième étape, on détermine une expression analytique approchée pour $\beta_2(M_0,\Delta)$. La méthode est similaire à celle décrite pour $\beta_1(M_0,\Delta)$ et aboutit à des constantes $X_{M_0,5}$ obtenues par des observations et un principe dichotomique, et aux coefficients de régression $X_{M_0,6}$ et $X_{M_0,7}$ résultant d'une régression linéaire.

A l'issue des deuxième, troisième et quatrième étapes, les paramètres $\beta_0(M_0,\Delta)$ $\beta_1(M_0,\Delta)$ et $\beta_1(M_0,\Delta)$ sont donc approchés par :

$$\hat{\gamma}_0(M_0,\Delta,X) = \frac{1}{X_{M_0,0} + X_{M_0,1}\Delta}$$

$$\hat{\beta}_1(M_0,\Delta,X) = X_{M_0,2} + \frac{1}{X_{M_0,3} + X_{M_0,4}\Delta}$$

$$\hat{\beta}_2(M_0,\Delta,X) = X_{M_0,5} + \frac{1}{X_{M_0,6} + X_{M_0,7}\Delta}$$

où $X = (X_{M_0,i}, i = 0,...,7)$ sont des constantes et $M = \Delta M_0$.

A titre d'exemple, on obtient les valeurs suivantes pour les constantes $X_{M_0,i}$ :

| $i$ | $X_{1,i}$ |
|---|---|
| 0 | 3.749537080226911 |

(suite)

| i | $X_{1,i}$ |
|---|---|
| 1 | 1.979024470225419 |
| 2 | 0.1278 |
| 3 | 44.40837972047 |
| 4 | -2388308992127 |
| 5 | -0.01695 |
| 6 | -59.8527100742165 |
| 7 | 0.002682543510203 |

| i | $X_{2,i}$ |
|---|---|
| 1 | 1.841075374931 1.449306149097 |
| 2 | 1.35316354744 |
| 3 | -938.4919208703 |
| 4 | -88.8361913364 |
| 5 | 0.0052 |
| 6 | 244.1654492502014 |
| 7 | 108.0508656872286 |

| i | $X_{3,i}$ |
|---|---|
| 0 | 1.52669295854 |
| 1 | 1.35316354744 |
| 2 | 0.020805 |
| 3 | 4549.832154147810 |
| 4 | -291.6673151047627 |
| 5 | -0.00246 |
| 6 | 365.1186107386227 |
| 7 | 206.4104975423009 |

Au cours d'une cinquième étape, on détermine des valeurs raffinées des constantes $X_{M_0,i}$, chaque valeur de $M_0$ dans l'intervalle [1,4], par une technique d'optimisation globale prenant comme point de départ les valeurs des constantes $X_{M_0,i}$ obtenues à l'issue des étapes précédentes. En d'autres termes, on cherche à minimiser la fonction de coût J(X) suivante, pour différentes valeurs de $M_0$ et $\Delta$ :

$$J(X) = \sum_{\Delta \in D_I} \left\{ [\gamma_0(M_0, \Delta) - \hat{\gamma}_0(M_0, \Delta, X)]^2 + [\beta_1(M_0, \Delta) - \tilde{\beta}_1(M_0, \Delta, X)]^2 \right. \\ \left. + [\beta_2(M_0, \Delta) - \hat{\beta}_2(M_0, \Delta, X)]^2 \right\}.$$

En reprenant l'exemple ci-dessus, on obtient les valeurs suivantes pour les constantes $X_{M_0,i}$ après raffinement, notées $\hat{X}_{M_0,i}$ :

| i | $\hat{X}_{1,i}$ |
|---|---|
| 0 | 4.1284847577952037 |
| 1 | 1.9727736832303955 |
| 2 | 0.12781855004225087 |
| 3 | -145.05800308934488 |
| 4 | -21.107642824529545 |
| 5 | -0.0066774831778281859 |

(suite)

| i | $\hat{X}_{1,i}$ |
|---|---|
| 6 | -101.50558821778166 |
| 7 | 0.019143799092025265 |
| i | $\hat{X}_{2,i}$ |
| 0 | 1.8972250435885989 |
| 1 | 1.4476020205502769 |
| 2 | 0.042968806649312435 |
| 3 | -777.23347311710006 |
| 4 | -92.112632592071719 |
| 5 | -0.0052062788262958060 |
| 6 | 592.90534082837007 |
| 7 | 95.812941281037240 |
| i | $\hat{X}_{3,i}$ |
| 0 | 1.5475698371471447 |
| 1 | 1.3525325059141944 |
| 2 | 0.020804395123443165 |
| 3 | -4549.2785603914681 |
| 4 | -291.01929434623634 |
| 5 | -0.0024560808314797906 |
| 6 | 366.6582745968002 |
| 7 | 222.89866975223239 |

Les $\Delta$ paramètres angulaires $\theta_i$ permettant de satisfaire la condition de reconstruction parfaite, pour $0 \leq i \leq \Delta - 1$, peuvent alors s'exprimer sous la forme suivante :

$$\theta_i = f(x_i) = \frac{\pi}{2}(1 - x_i) + \frac{2x_i - 1}{\hat{X}_{M_0,0} + \hat{X}_{M_0,1}\Delta} + 8x_i(2x_i^2 - 3x_i + 1)$$

$$\times \left[ \hat{X}_{M_0,2} + \frac{1}{\hat{X}_{M_0,3} + \hat{X}_{M_0,4}\Delta} + 4\left( \hat{X}_{M_0,5} + \frac{1}{\hat{X}_{M_0,6} + \hat{X}_{M_0,7}\Delta} \right)(2x_i - 1)^2 \right]$$

où $x_i = \frac{2i+1}{2\Delta}$, et on peut en déduire les coefficients du filtre prototype p, tels que :

- $p[i] = cos\theta_i$, $p[M + i] = sin\theta_i$ pour $0 \leq i \leq \Delta - 1$ ;
- $p[k] = 1$, $\Delta \leq k \leq M - 1$.

Bien entendu, des équations similaires peuvent être obtenues pour d'autres valeurs du degré d, notamment $d = 1$.

*5.3 Exemple de détermination des filtres prototypes pour un système OFDM suréchantillonné*

On décrit ci-après un exemple particulier de l'invention, dans lequel on cherche à atteindre une précision de l'ordre de $10^{-4}$ entre la meilleure localisation obtenue avec la représentation compacte selon l'invention par rapport à la meilleure localisation obtenue par optimisation des angles, telle que décrite dans le document *« Perfect reconstruction conditions and design of oversampled DFT-modulated transmultiplexers »* précité, dans un système de transmission de type OFDM suréchantillonné. Cet exemple reprend et précise les équations présentées au paragraphe 5.2.

*5.3.1 Cas d'un suréchantillonnage allant de 5/4 à 21/20*

Lorsque $M_0$ varie de 4 à 20, avec un système de type OFDM suréchantillonné (ou FMT), on couvre les rapports de suréchantillonnage allant de 5/4 à 21/20. En d'autres termes, on se situe dans l'intervalle des valeurs usuelles du préfixe cyclique pour un système CP-ODFM dans lequel la longueur de l'intervalle de garde est le plus souvent comprise entre 1/16 et 1/4. Pour la valeur de $\Delta$, l'objectif est de couvrir la plage allant de 4 à 200.

On considère selon cet exemple une représentation compacte de degré $d = 2$, et que $4 \leq M_0 \leq 20$. Les valeurs des paramètres $\beta_0$ et $\beta_1$ de la représentation compacte de degré 2 donnant la meilleure localisation temps/fréquence sont étudiées et une fonction simple de $M_0$ et $\Delta$ est obtenue.

On note $\beta_0(M_0,\Delta)$ et $\beta_1(M_0,\Delta)$ les paramètres de la représentation compacte $f(x)$ donnant la meilleure localisation temps/fréquence pour un filtre prototype à phase linéaire et à reconstruction parfaite pour les paramètres $M_0$, $N_0 = M_0 + 1$ de longueur $L = \Delta N_0$, telle que :

$$f(x) = \frac{\pi}{4} + t[\beta_0 + \beta_1(2t^2 - 1)], \, t = 2x - 1, \, 0 \leq x \leq 1.$$

Dans toute la suite de ce paragraphe, on introduit le changement de variable suivant :

$$\gamma_0(M_0, \Delta) = \frac{\pi}{4} + \beta_0(M_0, \Delta) + \beta_1(M_0, \Delta)$$

de sorte que la fonction polynomiale ou représentation compacte donnant la meilleure localisation temps/fréquence s'écrit :

$$f(x) = \frac{\pi}{2}(1 - x) + t[\gamma_0(M_0, \Delta) + 2(t^2 - 1)\beta_1(M_0, \Delta)]$$

et on étudie le comportement des paramètres $\beta_1(M_0,\Delta)$ $(M_0,\Delta)$ et $\gamma_0(M_0,\Delta)$ en fonction de $M_0$ et $\Delta$.

Les inventeurs de la présente demande de brevet ont tout d'abord démontré que, pour $M_0$ fixé, $\beta_1(M_0,\Delta)$ se comporte approximativement comme une fonction de la forme $a(M_0) + b(M_0)/\Delta$. On peut donc déterminer les coefficients $a(M_0)$ et $b(M_0)$ par régression linéaire, c'est-à-dire minimisant la fonction :

$$\sum_{\Delta=4}^{200} \left[ \beta_1(M_0, \Delta) - \left( a(M_0) + \frac{b(M_0)}{\Delta} \right) \right]^2$$

Considérant que les fonctions $1/\sqrt{a(M_0)}$ et $1/\sqrt{b(M_0)}$ se comportent comme des fonctions quasi-linéaires de $M_0$, les coefficients de ces fonctions sont à leur tour déterminés par régression linéaire, ce qui aboutit à une expression de $a(M_0)$ et $b(M_0)$ sous la forme :

$$a(M_0) = \frac{X_0}{(X_1 + M_0)^2}, \, b(M_0) = \frac{X_2}{(X_3 + M_0)^2}$$

comme déjà décrit au paragraphe 5.2.1.

Les inventeurs ont ensuite démontré que, pour $M_0$ fixé, l'inverse de $\gamma_0(M_0,\Delta)$ varie presque linéairement en fonction de $\Delta$. On peut donc déterminer, par régression linéaire, les deux fonctions $c(M_0)$ et $d(M_0)$ telles que :

$$\frac{1}{\gamma_0(M_0, \Delta)} \cong c(M_0) + \frac{d(M_0)}{\Delta}$$

Ensuite, les inventeurs ont montré que pour $X_4 = 1{,}273$, la fonction $(c(M_0) - X_4)^{-1/2}$ est quasi linéaire, et que

pour $X_7$ = 1,273, la fonction $(d(M_0) - X_7)^{-1/2}$ est également quasi linéaire.

De nouveau, il est donc possible d'effectuer des régressions linéaires pour déterminer les équations des droites approximant ces courbes, de sorte que l'on peut approcher les deux fonctions $c(M_0)$ et $d(M_0)$ par les formules :

$$c(M_0) = X_4 + \frac{X_5}{(M_0 + X_6)^2}, \quad d(M_0) = X_7 + \frac{X_8}{(M_0 + X_9)^2}$$

comme déjà décrit au paragraphe 5.2.1.

Les paramètres $\gamma_0(M_0,\Delta)$ et $\beta_1(M_0,\Delta)$ sont donc approchés par :

$$\bar{\beta}_1(M_0, \Delta, X) = \frac{X_0}{(X_1 + M_0)^2} + \frac{X_2}{\Delta(X_2 + M_0)^2}$$

$$\bar{\gamma}_0(M_0, \Delta, X) = \left[ X_4 + \frac{X_5}{(X_6 + M_0)^2} + \Delta(X_7 + \frac{X_8}{(X_9 + M_0)^2}) \right]^{-1}$$

où $X = (X_i, i = 0,...,9)$ sont des constantes et M = $\Delta M_0$.

On considère alors la fonction coût $J(X)$ définie pour X = $(X_i, i = 0,...,9)$ par :

$$J(X) = \sum_{M_0=1}^{20} \sum_{\Delta=1}^{200} \left[ \beta_1(M_0, \Delta) - \bar{\beta}_1(M_0, \Delta, X) \right]^2 + \left[ \gamma_0(M_0, \Delta) - \bar{\gamma}_0(M_0, \Delta, X) \right]^2$$

et l'on détermine le minimum de la fonction coût $J(X)$ en prenant comme valeur initiale de X la suite de constantes précédemment calculées.

Le minimum de la fonction coût $J(X)$ peut être trouvé avec un programme d'optimisation globale (de type CFSQP par exemple).

On obtient alors les valeurs présentées au paragraphe 5.2.1 pour les constantes $X_i$ avant raffinement et $\hat{X}_i$ après raffinement.

Ce sont ces valeurs qui permettent d'obtenir une expression simple, dépendant de $M_0$ et de $\Delta$, d'un filtre prototype quasi-optimal pour l'optimisation de la localisation temps/fréquence avec une erreur relative inférieure à $10^{-4}$ par rapport au meilleur filtre prototype actuellement connu pour l'optimisation de la localisation temps/fréquence.

Pour résumer, partant de la représentation compacte $f(x)$ pour un degré $d$ = 2, et prenant en compte les approximations proposées pour les paramètres $\gamma_0(M_0,\Delta)$ et $\beta_1(M_0,\Delta)$ les $\Delta$ paramètres angulaires $\theta_i$ s'obtiennent, pour $0 \le i \le \Delta - 1$, par l'expression :

$$\theta_i = f(x_i) = \frac{\pi}{2}(1 - x_i) + (2x_i - 1)\left[ \frac{1}{c(M_0) + d(M_0)\Delta} + 2[(2x_i - 1)^2 - 1]\left[ a(M_0) + \frac{b(M_0)}{\Delta} \right] \right]$$

où $x_i = \frac{2i+1}{2\Delta}$.

Si bien que compte tenu des coefficients $a(M_0)$, $b(M_0)$, $c(M_0)$ et $d(M_0)$, ces angles quasi-optimaux vont, pour tout paramètre $M_0$ et $\Delta$, ne dépendre que des constantes $X_i$ données dans les tableaux du paragraphe 5.2.1.

*5.3.2 Cas d'un suréchantillonnage allant de 2 à 4/3*

Lorsque $M_0$ est égal à 2 ou 3, avec un système de type OFDM suréchantillonné (ou FMT), on couvre les rapports de suréchantillonnage égaux respectivement à 3/2 et 4/3. On se situe donc dans un intervalle particulier de valeurs du préfixe cyclique pour un système CP-ODFM correspondant à une longueur de l'intervalle de garde respectivement égale à 1/2 et 1/3.

En revanche, lorsque $M_0$ est égal à 1, on couvre le rapport de suréchantillonnage égal à 2. Ce cas particulier est très intéressant, car il permet également de déterminer le filtre prototype actuellement le plus fréquemment utilisé pour la modulation OFDM/OQAM. De plus, il s'applique également directement à des solutions basées sur le banc de filtres CMFB qui sont concurrentes pour la transmission et sont également utiles pour le codage en sous-bandes.

On considère selon cet exemple une représentation compacte de degré $d$ = 3, et que $1 \leq M_0 \leq 3$. Les valeurs des paramètres $\beta_0$, $\beta_1$ et $\beta_2$ de la représentation compacte de degré 3 donnant la meilleure localisation temps/fréquence sont étudiées et une fonction simple de $M_0$ et $\Delta$ est obtenue. C'est donc la meilleure représentation compacte de degré 3 qui sert maintenant de base pour trouver une approximation convenable des valeurs des coefficients du filtre prototype par une formule approchée explicite.

Chacun des cas $M_0$ = (1, 2, 3) est traité de la même manière.

On note $\beta_0(M_0,\Delta)$, $\beta_1(M_0,\Delta)$ et $\beta_2(M_0,\Delta)$ les paramètres de la représentation compacte $f(x)$ donnant la meilleure localisation temps/fréquence pour un filtre prototype à phase linéaire et à reconstruction parfaite pour les paramètres $M_0$, $N_0 = M_0 + 1$ de longueur $L = \Delta N_0$, telle que :

$$f(x) = \frac{\pi}{4} + t[\beta_0(M_0, \Delta) + \beta_1(M_0, \Delta)T_2(t) + \beta_2(M_0, \Delta)T_4(t)], t = 2x - 1, 0 \leq x \leq 1,$$

Dans toute la suite de ce paragraphe, on introduit le changement de variable suivant :

$$\gamma_0(M_0, \Delta) = \frac{\pi}{4} + \beta_0(M_0, \Delta) + \beta_1(M_0, \Delta) + \beta_2(M_0, \Delta)$$

de sorte que la fonction polynomiale ou représentation compacte donnant la meilleure localisation temps/fréquence s'écrit :

$$f(x) = \frac{\pi}{2}(1 - x) + \gamma_0(M_0, \Delta)t + 2t(t^2 - 1)[\beta_1(M_0, \Delta) + 4\beta_2(M_0, \Delta)t^2],$$

$$t = 2x - 1, 0 \leq x \leq 1,$$

et on étudie le comportement des paramètres $\beta_1(M_0,\Delta)$ et $\gamma_0(M_0,\Delta)$ en fonction de $M_0$ et $\Delta$.

Les inventeurs de la présente demande de brevet ont tout d'abord démontré que l'inverse de la fonction $\gamma_0(M_0,\Delta)$ varie linéairement en fonction de $\Delta$ pour $6 \leq \Delta \leq 200$.

Un calcul de régression linéaire permet donc d'obtenir une expression approchée de $\gamma_0(M_0,\Delta)$ sous la forme :

$$\gamma_0(M_0, \Delta) \cong \frac{1}{X_{M_0,0} + X_{M_0,1}\Delta} = \widehat{\gamma_0}(M_0, \Delta, X), M_0 = 1, 2, 3, 4 \leq \Delta \leq 200.$$

comme déjà décrit au paragraphe 5.2.2.

Les inventeurs ont ensuite démontré qu'il était possible de choisir des constantes $X_{M_0,2}$, pour $M_0$ = 1, 2, 3 telles que la variation de la fonction $1/(X_{M_0,2}, - \beta_1(M_0,\Delta))$ soit quasi-linéaire, de sorte que l'on peut approcher $\beta_1(M_0,\Delta)$ par

$$\beta_1(M_0, \Delta) \cong X_{M_0,2} + \frac{1}{X_{M_0,3} + X_{M_0,4}\Delta} = \widehat{\beta_1}(M_0, \Delta, X), M_0 = 1, 2, 3, 4 \leq \Delta \leq 200,$$

où les constantes $X_{M_0,3}$, $X_{M_0,4}$ sont obtenues par régression linéaire.

On procède de même pour déterminer une estimation des paramètres $\beta_2(M_0,\Delta)$, qui peuvent être approchés par :

$$\beta_2(M_0, \Delta) \cong X_{M_0,5} + \frac{1}{X_{M_0,6} + X_{M_0,7}\Delta} = \widehat{\beta_2}(M_0, \Delta, X), M_0 = 1, 2, 3, 4 \leq \Delta \leq 200.$$

où $X = (X_{M_0,i}, i = 0,...,7)$ sont des constantes et $M = \Delta M_0$.

On considère alors la fonction coût $J(M_0, X)$ définie pour $X = (X_{M_0,i}, i = 0,...,7)$ par:

$$J(X) = \sum_{\Delta=4}^{200} \left\{ [\gamma_0(M_0, \Delta) - \hat{\gamma}_0(M_0, \Delta, X)]^2 + [\beta_1(M_0, \Delta) - \hat{\beta}_1(M_0, \Delta, X)]^2 + [\beta_2(M_0, \Delta) - \hat{\beta}_2(M_0, \Delta, X)]^2 \right\},$$

et l'on détermine le minimum de la fonction coût $J(X)$ en prenant comme valeur initiale de X la suite de constantes précédemment calculées. A titre d'exemple, un programme d'optimisation globale permet de déterminer les constantes $\hat{X}_{M_0,i}$, $M_0 = 1, 2, 3, 0 \le i \le 7$, minimisant J(X).

On obtient les valeurs présentées au paragraphe 5.2.2 pour les constantes $X_{M_0,i}$ avant raffinement et $\hat{X}_{M_0,i}$ après raffinement.

Comme au paragraphe précédent, en posant $x_i = \frac{2i+1}{2\Delta}$, la combinaison des équations précédentes permet, avec les valeurs des constantes proposées ci-dessus, de déterminer les $\Delta$ paramètres angulaires $\theta_i$ permettant de satisfaire la condition de reconstruction parfaite, pour $0 \le i \le \Delta - 1$, sous la forme suivante :

$$\theta_i = f(x_i) = \frac{\pi}{2}(1 - x_i) + \frac{2x_i - 1}{\hat{X}_{M_0,0} + \hat{X}_{M_0,1}\Delta} + 8x_i(2x_i^2 - 3x_i + 1)$$

$$\times \left[ \hat{X}_{M_0,2} + \frac{1}{\hat{X}_{M_0,3} + \hat{X}_{M_0,4}\Delta} + 4\left( \hat{X}_{M_0,5} + \frac{1}{\hat{X}_{M_0,6} + \hat{X}_{M_0,7}\Delta} \right)(2x_i - 1)^2 \right]$$

et on peut en déduire les coefficients du filtre prototype p.

### 5.4 Etude analytique et performances de l'invention

### 5.4.1 Analyse de la linéarité de phase

On présente ci-après les différentes observations et démonstrations ayant permis aux inventeurs d'aboutir à la solution proposée.

Pour $M_0$ fixé, $N_0 = M_0 + 1$ et $\Delta \ge 1$, on considère le filtre prototype p (ou sa transformée en z, $P(z)$) de longueur $L = \Delta N_0$ dépendant des $\Delta$ paramètres angulaires $\theta_i$, pour $0 \le i \le \Delta - 1$, défini par :

$$P(z) = \sum_{i=0}^{\Delta-1} z^{-i} P_i(z^\Delta)$$

où :

$$P_i(z) = \sum_{n=0}^{M_0} p_i[n]z^{-n}$$

$p_i[0] = \cos\theta_i$, $p_i[M_0] = \sin\theta_i$

$p_i[n] = 1$, $1 \le n \le M_0$.

La localisation temps-fréquence, pour le filtre prototype p, est optimisée en maximisant l'expression $\xi(p) = 1/\sqrt{4m_2 M_2}$ telle que définie dans le document « Closed form expression of optimal short PR FMT prototype filters » précité, en fonction de $p_i$, en considérant $\Delta$ paramètres angulaires $\theta_i$, pour $0 \le i \le \Delta - 1$, comme $\Delta$ variables indépendantes.

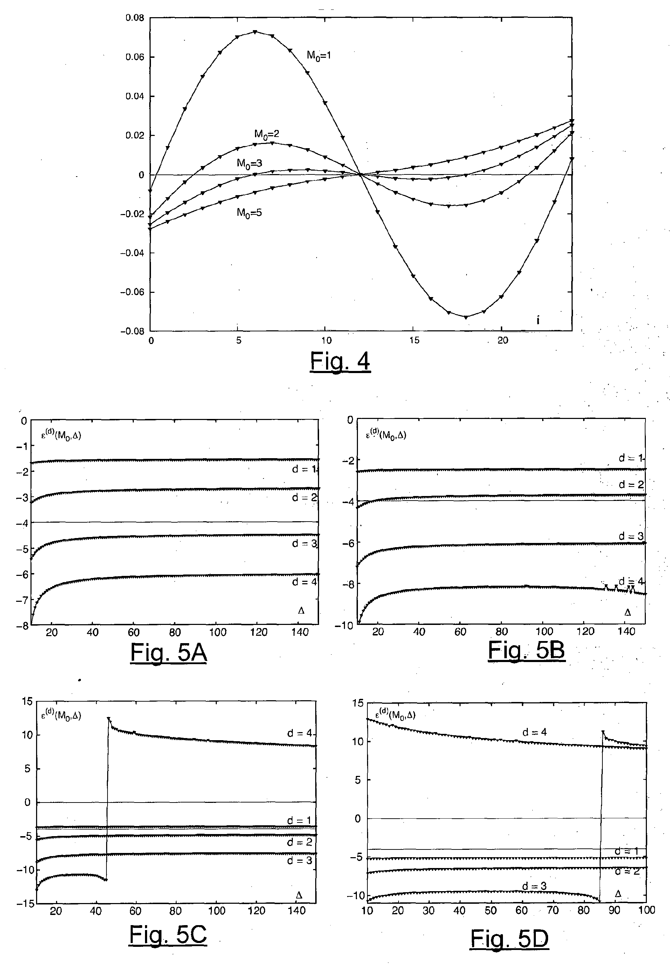

La figure 4 illustre, pour différentes valeurs de $M_0 = (1, 2, 3, 5)$ et $\Delta = 25$, les variations des angles optimaux en fonction de *i*. Ces angles optimaux peuvent s'exprimer sous la forme $\theta_{M_0,\Delta,i} = \frac{\pi}{2}(1 - \frac{2i+1}{2\Delta})$, où $\theta_{M_0,\Delta,i}$ désigne la valeur du i-ème angle optimal pour les paramètres $M_0$ et $\Delta$. On observe une variation régulière des angles $\theta_{M_0,\Delta,i}$ lorsque *i* varie entre 0 et $\Delta$-1, et que l'on a approximativement la symétrie :

$$\theta_{M_0,\Delta,i} = \frac{\pi}{2} - \theta_{M_0,\Delta,\Delta-1-i}$$

Cette symétrie, lorsqu'elle est vérifiée exactement, implique que le filtre *P(z)* optimal est à phase linéaire.

Pour respecter la symétrie observée sur les angles optimaux, on propose selon l'invention d'utiliser une fonction polynomiale *f(x)*, encore appelée représentation compacte, spécifique, de la forme suivante :

$$f(x) = \frac{\pi}{4} + t \sum_{k=0}^{d-1} \beta_k T_{2k}(t), \; t = 2x - 1$$

avec $T_n(t)$ le polynôme de Chebyshev de degré n.

La fonction polynomiale *f* proposée par les inventeurs dépend de *d* paramètres $\beta_k$, où d est le degré de la représentation compacte. En particulier, elle respecte la propriété de symétrie $f(1 - x) = \frac{\pi}{2} - f(x)$ qui correspond à la propriété de symétrie observée pour les angles optimaux.

*5.4.2 Analyse comparative des performances*

On décrit ci-après les performances obtenues par la technique de l'invention, permettant de déterminer des coefficients du filtre prototype dans le cas où les optimisations sont réalisées sur les paramètres de la représentation compacte *f(x)* telle que définie ci-dessus, en comparaison avec les performances obtenues selon l'art antérieur, permettant de déterminer des coefficients du filtre prototype dans le cas où les optimisations sont réalisées directement sur les angles.

A titre d'exemple, l'optimisation de la localisation temps-fréquence est effectuée avec des valeurs de d allant de 1 à 4 pour $1 \leq M_0 \leq 20$ et $1 \leq \Delta \leq 200$. Lorsque la localisation optimum $\xi_{opt}(M_0,\Delta)$ a pu être obtenue par optimisation directe sur les angles (de façon classique), on calcule l'erreur relative de la façon suivante :

si $\xi_{opt}^{(d)}(M_0,\Delta)$ désigne la localisation optimale pour le degré d de la représentation compacte, on pose :

$$\varepsilon^{(d)}(M_0,\Delta) = \sigma \log_{10} \left| \frac{\xi_{opt}^{(d)}(M_0,\Delta) - \xi_{opt}(M_0,\Delta)}{\xi_{opt}(M_0,\Delta)} \right|$$

où $\sigma$ = -1 si la valeur $\xi_{opt}^{(d)}(M_0,\Delta)$ est approchée par défaut, et +1 sinon.

Dans ce dernier cas, la technique selon l'invention basée sur la représentation compacte donne de meilleurs résultats que la technique classique basée sur l'optimisation directe des angles.

Les figures 5A à 5D représentent les valeurs de $\xi^{(d)}(M_0,\Delta)$ pour différentes valeurs de $M_0$ ($M_0$ = 1 pour la figure 5A, $M_0$ = 2 pour la figure 5B, $M_0$ = 4 pour la figure 5C, et $M_0$ = 10 pour la figure 5D).

Les figures 5A et 5B montrent que le degré d = 2 est insuffisant pour approcher la meilleure localisation avec une erreur relative inférieure à $10^{-4}$. Sur la figure 5C, on observe que la meilleure localisation obtenue à partir de la représentation compacte, pour d = 4, excède la meilleure localisation obtenue par optimisation sur les angles, à partir d'une certaine valeur de $\Delta$. La figure 5D montre que c'est également le cas avec d = 3. Pour d = 4 l'optimisation avec la représentation compacte donne un meilleur résultat que l'optimisation sur les angles pour toutes les valeurs de $\Delta$.

Le tableau ci-dessous donne l'erreur relative maximum de la meilleure localisation obtenue avec la représentation compacte avec $1 \leq d \leq 4$ par rapport à la meilleure localisation obtenue par optimisation des angles ($\log_{10}\varepsilon(M_0,d)$). Un tiret indique que pour toutes les valeurs de $\Delta$ avec $10 \leq \Delta \leq 200$, le résultat obtenu avec la représentation compacte est meilleur que celui obtenu par l'optimisation directe avec les angles :

| $M_0 \backslash d$ | 1 | 2 | 3 | 4 |
|---|---|---|---|---|
| 1 | -1.562 | -2.696 | -4.493 | -6.04 |
| 2 | -2.479 | -3.72 | -6.078 | -8.123 |
| 3 | -3.111 | -4.373 | -6.973 | -9.461 |
| 4 | -3.583 | -4.852 | -7.595 | -10.671 |
| 5 | -3.957 | -5.23 | -8.058 | -11.565 |
| 6 | -4.267 | -5.541 | -8.428 | - |
| 7 | -4.531 | -5.824 | -8.741 | - |
| 8 | -4.76 | -6.054 | -9.013 | - |
| 9 | -4.963 | -6.257 | -9.252 | - |
| 10 | -5.144 | -6.44 | -9.455 | - |
| 11 | -5.309 | -6.605 | -9.642 | - |
| 12 | -5.459 | -6.756 | -9.848 | - |
| 13 | -5.598 | -6.895 | -10.019 | - |
| 14 | -5.726 | -7.025 | -10.152 | - |
| 15 | -5.845 | -7.146 | -10.322 | - |
| 16 | -5.957 | -7.259 | -10.476 | - |
| 17 | -6.062 | -7.366 | -10.614 | - |
| 18 | -6.162 | -7.467 | -10.734 | - |
| 19 | -6.255 | -7.563 | -10.878 | - |
| 20 | -6.345 | -7.656 | -10.979 | - |

*5.4.3 Cas particulier des petites valeurs de $\Delta$*

Le cas des petites valeurs de $\Delta$ ($\Delta \leq 3$) concerne a priori davantage les systèmes de codage en sous-bandes plutôt que les systèmes de transmission. On note toutefois que certains systèmes de transmission filaire en optique présentent désormais un nombre très faible de porteuses.

Les filtres prototypes déterminés selon l'invention, placés en amont d'uri système multiporteuses, peuvent également présenter un intérêt pour réaliser des opérations de précodage.

Ainsi, dans le cas du 3 GPP LTE, la voie montante (en anglais « uplink » ou UL) utilise un système d'accès de type SC-FDMA (en anglais Single-Carrier Frequency Division Multiplex Access) avec une opération de précodage de type DFT appliquée avant la modulation OFDM. De la même manière, on peut réaliser un précodage de type DFT avant d'entrer sur un modulateur de type OFDM/OQAM. Il est également possible de réaliser le précodage à partir d'un banc de filtres d'analyse. Dans ce dernier cas, si l'on cherche à obtenir un accès similaire à celui proposé dans le cas du 3 GPP UL, qui regroupe au moins 12 porteuses, on choisira alors $\Delta \geq 6$. Par contre, si l'on cherche à réaliser des regroupements plus fins, on peut avoir besoin de valeurs plus petites de $\Delta$, et notamment $\Delta < 4$. Dans un cas comme dans l'autre, pour réaliser, comme en SC-FDMA, un accès flexible en nombre de sous-porteuses alloué à chaque utilisateur, il est indispensable de disposer d'un système de précodage de type AFB ou SFB qui puisse s'exécuter en temps réel, d'où l'importance de disposer d'expressions explicites pour la détermination des coefficients du filtre prototype comme celles proposées par l'invention.

*A. Cas $\Delta = 1$*

On considère un premier exemple selon lequel $\Delta = 1$.

Pour $\Delta = 1$, $M_0 \geq 1$, et $N_0 = M_0 + 1$, un filtre prototype à phase linéaire et à reconstruction parfaite est de la forme $P(z) = \sum_{n=0}^{M_0} p[n] z^{-n}$, de longueur $L = N = \Delta N_0 = \Delta(M_0 + 1) = M_0 + 1$, avec :

$p[0] = \cos\theta$ ;
$p[M_0] = \sin\theta$ ; et
$p[n] = 1$, $1 \leq n \leq M_0$.
Si $M_0 = 1$, le filtre prototype $P(z)$ est donc de longueur 2 et la localisation maximum est égale à 1 lorsque les deux coefficients du filtre sont égaux, c'est-à-dire lorsque $\theta = \pi/4$.

Pour $M_0 \geq 2$, on introduit le paramètre $t = \tan\frac{\theta}{2}$ et la localisation du filtre prototype définie par la valeur de $\theta$ peut s'exprimer comme une fonction de t.

Les inventeurs de la présente demande de brevet ont démontré que les seules valeurs de $\theta \in [0, \pi/2]$ donnant un filtre prototype $P(z)$ à phase linéaire sont :

- $\theta = 0$;
- $\theta = \pi/2$, donnant un filtre prototype $P(z)$ à coefficients constants égaux à 1 et de longueur $M_0$ ; et
- $\theta = \pi/4$, c'est-à-dire $t = \tan \pi/8 = \sqrt{2} - 1$, donnant un filtre de longueur $M_0 + 1$, de localisation maximale lorsque $M_0 \geq 3$.

Pour $M_0 \geq 2$, l'expression de la meilleure localisation temps/fréquence $\xi$ est donnée par :

$$\xi^2 = \frac{3(2+\sqrt{2})M_0^2}{2(2M_0^4 - 3(2-\sqrt{2})M_0^2 + 2(8-3\sqrt{2})M_0 - 6 + 3\sqrt{2})}.$$

On peut déduire de cette expression un développement asymptotique de la meilleure localisation lorsque $M_0$ tend vers l'infini. On introduit la constante algébrique $b = \sqrt{6 + 3\sqrt{2}}$. La constante b est la racine du polynôme $X^4 - 12X^2 + 18$ comprise entre 3 et 4, et on remarque que $\sqrt{2} = \frac{1}{3}b^2 - 2$.

On obtient alors :

$$\xi = \frac{b}{2}\frac{1}{\sqrt{M_0}} - \frac{b}{8}(b^2 - 12)\frac{1}{M_0^{3/2}} - \frac{b}{32}(10b^2 - 77)\frac{1}{M_0^{5/2}} + o\left(\frac{1}{M_0^{5/2}}\right).$$

*B. Cas $\Delta = 2$*

On considère un deuxième exemple selon lequel $\Delta = 2$.

Pour $\Delta = 2$, $M_0 \geq 1$, et $N_0 = M_0 + 1$, un filtre prototype à phase linéaire et à reconstruction parfaite est de la forme $P(z) = \sum_{n=0}^{2M_0+1} p[n]z^{-n}$, avec :

$$p[0] = p[2M_0 + 1] = \cos\theta = \frac{1 - t^2}{1 + t^2}$$

$$p[1] = p[2M_0] = \sin\theta = \frac{2t}{1 + t^2}$$

$$p[n] = 1, \ 2 \leq n \leq 2M_0 - 1.$$

$$t = \tan\frac{\theta}{2}.$$

Lorsque $M_0 = 1$, le carré de la localisation temps fréquence du filtre prototype $P(z)$ est égal à :

$$\xi^2 = \frac{(1 + t^2)^4}{2(t^4 + 2t^3 - 2t + 1)(5t^4 - 4t^3 - 6t^2 + 4t + 5)}.$$

Cette fonction admet un maximum égal à 1 pour les valeurs $t = 1$ et t $= t_{M0,2} = t_{1,2} = \frac{1}{3}\left(\sqrt{10} - 1\right)$. Pour $t = 1$, on obtient le filtre prototype $P(z) = z^{-1} + z^{-2}$ qui n'est que de longueur 2. Pour t $= t_{1,2}$, les inventeurs de la présente demande de brevet ont démontré que $\theta_1 = 2$ atan $t_{1,2}$ est tel que $\cos\theta_1 = \frac{\sqrt{10}}{10}$, $\sin\theta_1 = \frac{3\sqrt{10}}{10}$, de sorte que le filtre prototype P(z) est proportionnel au filtre $1 + 3z^{-1} + 3z^{-2} + z^{-3}$, dont les coefficients sont les coefficients binomiaux $C_3^n$, $0 \leq n \leq 3$.

À partir des expressions ci-dessus, les inventeurs ont obtenu une expression explicite du carré de la localisation du le filtre prototype $P(z)$ pour les valeurs de $M_0 > 1$, comme fonction de $M_0 \geq 2$ et t :

$$\xi^2 = \frac{M_0^2(1 + t^2)^4}{(3t^4 + 6t^2 - 8t + 3)(c_0 t^4 + c_3 t^3 + c_2 t^2 + c_1 t + c_0)}$$

avec :

$$c_0 = \frac{1}{3}(4M_0 - 1)(M_0^2 - 2M_0 + 6),$$

$$c_1 = 4(2M_0^2 - 2M_0 + 1),$$

$$c_2 = \frac{2}{3}(4M_0^3 - 9M_0^2 + 2M_0 - 6),$$

$$c_3 = 4(1 - 2M_0).$$

On peut alors vérifier, en calculant la dérivée par rapport à t de l'expression de $\xi^2$ que la localisation maximale au carré admet un unique maximum pour $0 < t < 1$ lorsque t est la racine $t_{M_0,2}$ du polynôme $p_{M_0,2}(t)$ de degré 8 comprise entre 0 et 1 :

$$\begin{aligned}
p_{M_0,2}(t) = {} & 9(2M_0 - 1)t^8 + 72M_0 t^7 + 6(4M_0^3 - 18M_0^2 + 32M_0 - 9)t^6 - 24(5M_0 - 4)t^5 \\
& + 20(2M_0^3 - 9M_0^2 - 11M_0 - 3)t^4 + 24(12M_0^2 - 7M_0 + 2)t^3 \\
& + 2(4M_0^3 - 18M_0^2 + 152M_0 + 3)t^2 - 24(4M_0^2 - M_0 + 2)t \\
& - 8M_0^3 + 35M_0^2 - 70M_0 + 21.
\end{aligned}$$

Puisque le polynôme $p_{M_0,2}(t)$ est à coefficients rationnels, sa racine $t_{M_0,2}$ peut être isolée dans un intervalle d'extrémités rationnelles de largeur aussi petite que souhaitée grâce à un algorithme spécifique du calcul formel.

Les valeurs numériques des racines $t_{M_0,2}$ sont données ci-après, à titre d'exemple, pour $1 \leq M_0 \leq 20$:

| $M_0$ | $t_{M0,2}$ ($\Delta = 2$) |
|---|---|
| 1 | 0.7207592200561267 |
| 2 | 0.6230611880662939 |
| 3 | 0.5998582009376935 |
| 4 | 0.6905205312873218 |
| 5 | 0.5859186862885958 |
| 6 | 0.5833429169406708 |
| 7 | 0.5817660664739736 |
| 8 | 0.5807844646811003 |

(suite)

| $M_0$ | $t_{M0,2}$ ($\Delta = 2$) |
|---|---|
| 9 | 0.5800242478575531 |
| 10 | 0.5795151722760787 |
| 11 | 0.6791381752055025 |
| 12 | 0.5788513798845882 |
| 13 | 0.5786282325151038 |
| 14 | 0.5784512522255555 |
| 15 | 0.6783085584527088 |
| 16 | 0.5781918324974297 |
| 17 | 0.580951979961705 |
| 18 | 0.5780142689128818 |
| 19 | 0.6779458091883689 |
| 20 | 0.5778874088953448 |

Lorsque $M_0$ tend vers l'infini, $t_{M_0,2}$ admet le développement limité :

$$t_{M_0,2} = \frac{\sqrt{3}}{3} + \frac{1}{6}(3 - \sqrt{3})\frac{1}{M_0^2} + \frac{1}{24}(87 - 49\sqrt{3})\frac{1}{M_0^3} + o\left(\frac{1}{M_0^3}\right).$$

On en déduit que l'angle $\theta_{M0} = 2 \operatorname{atan}(t_{M_0,2})$ tend vers $2 \operatorname{atan}\frac{\sqrt{3}}{3} = \frac{\pi}{3}$ lorsque $M_0$ tend vers l'infini.

Un développement limité de la localisation maximum lorsque $M_0$ tend vers l'infini est donné par :

$$\xi = \frac{\sqrt{3}+1}{2}\frac{1}{\sqrt{M_0}} + \frac{9(\sqrt{3}-1)}{32}\frac{1}{M_0^{3/2}} + o\left(\frac{1}{M_0^{3/2}}\right)$$

C. *Cas* $\Delta = 3$

On considère un troisième exemple selon lequel $\Delta = 3$.

Pour $\Delta = 3$, $M_0 \geq 1$, et $N_0 = M_0 + 1$, un filtre prototype à phase linéaire et à reconstruction parfaite est de la forme $P(z) = \sum_{n=0}^{3M_0+2} p[n] z^{-n}$, avec :

$$p[0] = p[3M_0 + 2] = \cos\theta = \frac{1 - t^2}{1 + t^2}$$

$$p[1] = p[3M_0 + 1] = \frac{\sqrt{2}}{2}$$

$$p[2] = p[3M_0] = \sin\theta = \frac{2t}{1 + t^2}$$

$$p[n] = 1,\ 3 \leq n \leq 3M_0 - 1.$$

$$t = \tan\frac{\theta}{2}.$$

Lorsque $M_0 = 1$, la localisation temps/fréquence maximale du filtre prototype P(z) est obtenue lorsque t est la seule racine positive $t_{1,3}$ du polynôme $p_{1,3}$ (t) de degré 8 :

$$p_{1,3}(t) = 85t^8 + 2(559 + 533\sqrt{2})t^7 - 2(455 + 114\sqrt{2})t^6 - 2(779 + 655\sqrt{2})t^5 + 100(4 + 5\sqrt{2})t^4 + 2(29 + 355\sqrt{2}t^3 + 2(615 + 314\sqrt{2})t^2 - 26(13 + 29\sqrt{2})t - 5(33 + 20\sqrt{2});$$

qui est égale à 0,7735089904848272.

Lorsque $M_0 > 1$, la localisation temps fréquence maximale du filtre prototype $P(z)$ est obtenue pour $t = t_{M_0,3}$, où $t_{M_0,3}$ est la racine comprise entre 0 et 1 du polynôme $p_{M_0,3}(t)$ de degré 6 :

$$\begin{aligned} p_{M_0,3}(t) = {}& (2 + \sqrt{2})[-9M_0^3 + 9(4 + \sqrt{2})M_0^2 - 2(49 + 6\sqrt{2}M_0 + 36 - 7\sqrt{2})]t^6 \\ & - [18M_0^3 + 78M_0^2 + 4(48 + 19\sqrt{2})M_0 + 8(9 + 2\sqrt{2})]t^5 \\ & - [9(2 + 2\sqrt{2})M_0^3 + 18(1 + 3\sqrt{2})M_0^2 - 2(202 + 143\sqrt{2})M_0 - 2(23 - 19\sqrt{2})]t^4 \\ & - 4\sqrt{2}[9M_0^3 - 36M_0^2 - 58M_0 - 12]t^3 \\ & + [9(2 + \sqrt{2})M_0^3 - 18(9 + 7\sqrt{2})M_0^2 - 2(202 + 83\sqrt{2})M_0 - 2(33 + 31\sqrt{2})]t^2 \\ & - [18\sqrt{2}M_0^3 - 72(1 + 2\sqrt{2})M_0^2 - 4(48 - 67\sqrt{2})M_0 - 8(9 + 8\sqrt{2})]t \\ & + 9(2 + \sqrt{2})M_0^3 - 18(3 + \sqrt{2}M_0^2 + 2(86 + 25\sqrt{2})M_0 - 2(1 + 27\sqrt{2}). \end{aligned}$$

Le polynôme $p_{M_0,3}(t)$ a été obtenu en dérivant l'expression explicite de la localisation du filtre prototype $P(z)$ par rapport à la variable t.

Le polynôme $p_{M_0,3}(t)$, pour $M_0 \geq 1$, n'est pas à coefficients rationnels, de sorte qu'il n'est pas possible de trouver un intervalle à extrémités rationnelles, de largeur arbitrairement petite, contenant la racine comprise entre 0 et 1 avec les algorithmes d'isolation de racine du calcul formel. Cependant la valeur numérique de la racine peut être calculée avec une précision arbitrairement grande.

Les valeurs numériques des racines $t_{M_0,3}$ sont données ci-après, à titre d'exemple, pour $1 \leq M_0 \leq 20$ :

| $M_0$ | $t_{M_0,3}(\Delta = 3)$ |
|---|---|
| 1 | 0.7735089904848272 |
| 2 | 0.7078423264003086 |
| 3 | 0.6879934489472395 |
| 4 | 0.6798534100842811 |
| 5 | 0.6758129170006672 |
| 6 | 0.6735394554693185 |
| 7 | 0.6721416282856840 |
| 8 | 0.6712238084245449 |
| 9 | 0.6705899762112198 |
| 10 | 0.6701344596441964 |
| 11 | 0.6697963667960210 |
| 12 | 0.6695386673479854 |
| 13 | 0.6693378192797244 |
| 14 | 0.6691782882675755 |
| 15 | 0.6690494946226222 |
| 16 | 0.6689440344482865 |
| 17 | 0.6688566025042910 |
| 18 | 0.6687833178070148 |
| 19 | 0.6687212888471892 |

(suite)

| $M_0$ | $t_{M_0,3}(\Delta = 3)$ |
|---|---|
| 20 | 0.6686683259532107 |

Le polynôme $p_{M_0,3}(t)$ est de degré 3 en la variable $M_0$. Ainsi, lorsque $M_0$ tend vers l'infini, $t_{M_0,3}$ tend vers la valeur de t comprise entre 0 et 1 qui annule le coefficient $c_3$ du terme de degré 3 en $M_0$ dans l'expression du polynôme $p_{M_0,3}(t)$ :

$$c_3 = -9(2 + \sqrt{2})(1 + t^2)^2(t^2 + 2t(\sqrt{2} - 1) - 1).$$

La racine positive du coefficient $c_3$ est égale à :

$$t_{\infty,3} = \sqrt{4 - 2\sqrt{2}} - \sqrt{2} + 1 = \tan\frac{3\pi}{16} \sim 0.668178638.$$

À partir de ce résultat, il est possible de déterminer un développement asymptotique de $t_{M_0,3}$ lorsque $M_0$ tend vers l'infini. On introduit la constante algébrique $b = \sqrt{4 + 2\sqrt{2}}$, racine de l'équation du quatrième degré $X^4 - 8X^2 + 8 = 0$. Tout quotient de polynôme en b peut s'écrire comme polynôme du troisième degré en b à coefficients rationnels et les calculs suivants sont effectués dans l'extension algébrique des rationnels par $b$ qui est une extension algébrique de degré 4 des rationnels $(\mathbb{Q}(b) = \mathbb{Q}[b])$.

On remarque que $\sqrt{2} = 2 - \frac{1}{2}b^2$ et que $t_{\infty,3} = \frac{1}{2}b^2 + b - 1$, et l'on obtient le développement limité :

$$t_{M_0,3} = t_{\infty,3} + \left(\frac{20}{3} + 4b - \frac{19}{3}b^2 - \frac{8}{3}b^3\right)\frac{1}{M_0^2} + \left(8 + \frac{44}{3}b - \frac{116}{9}b^2 - \frac{62}{9}b^3\right)\frac{1}{M_0^3} + o\left(\frac{1}{M_0^3}\right).$$

En reportant ce résultat dans l'expression explicite de la localisation comme fonction de $M_0$ et t, on obtient un développement limité de la valeur de la localisation maximale lorsque $M_0$ tend vers l'infini :

$$\xi^2 = \left(1 + \frac{7}{8}b - \frac{1}{8}b^2 - \frac{1}{8}b^3\right)\frac{1}{M_0} + \frac{1}{4M_0^2} + o\left(\frac{1}{M_0^2}\right)$$

et, en introduisant la variable c :

$$c = \left(1 + \frac{7}{8}b - \frac{1}{8}b^2 - \frac{1}{8}b^3\right)^{1/2}$$

on obtient :

$$\xi = c\left[\frac{1}{M_0^{1/2}} + \left(1 - b + \frac{1}{8}b^3\right)\frac{1}{M_0^{3/2}} + o\left(\frac{1}{M_0^{3/2}}\right)\right].$$

*D. Autres cas*

Pour les valeurs $\Delta = 4$ ou $\Delta = 5$, les filtres prototypes à phase linéaire et à reconstruction parfaite de faible longueur ($N_0 = M_0 + 1$, $L = N = \Delta N_0$) dépendent de deux paramètres angulaires.
Les inventeurs ont démontré qu'il n'existe qu'une seule valeur de ce couple d'angles qui permet d'obtenir une localisation temps/fréquence maximale.

*5.4.4 Bilan*

Le tableau ci-dessous donne en deuxième colonne le maximum du logarithme (en base 10) de l'erreur relative obtenue avec les filtres prototypes quasi-optimaux obtenus selon l'invention lorsque $1 \leq \Delta \leq 200$. Les colonnes suivantes montrent que la même méthode peut être utilisée pour des valeurs supérieures de $\Delta$.

| $M_0 \backslash \Delta$ | [1-200] | 512 | 1024 | 2048 |
|---|---|---|---|---|
| 1 | -4.49593 | -4.39377 | -4.02393 | -3.24624 |
| 2 | -4.98063 | -6.04721 | -6.0407 | -6.03758 |
| 3 | -5.71222 | -6.92517 | -6.9177 | -6.91479 |
| 4 | -4.13465 | -4.13618 | -4.1361 | -4.13606 |
| 5 | -4.52595 | -4.52562 | -4.52552 | -4.52546 |
| 6 | -4.84744 | -4.84707 | -4.84696 | -4.84691 |
| 7 | -5.1205 | -5.12011 | -5.12 | -5.11996 |
| 8 | -5.35747 | -5.3571 | -5.357 | -5.35697 |
| 9 | -5.56639 | -5.56628 | -5.5662 | -5.5662 |
| 10 | -5.7536 | -5.75338 | -5.75333 | -5.75337 |
| 11 | -5.92264 | -5.92256 | -5.92255 | -5.92264 |
| 12 | -5.07616 | -6.07689 | -6.07695 | -6.6771 |
| 13 | -6.1979 | -6.21875 | -6.21888 | -6.21912 |
| 14 | -6.30589 | -6.34997 | -6.3502 | -6.35054 |
| 15 | -6.40197 | -6.47202 | -6.47235 | -6.4728 |
| 16 | -6.48767 | -6.58608 | -6.58653 | -6.58709 |
| 17 | -6.56427 | -6.69311 | -6.69371 | -6.6944 |
| 18 | -6.63288 | -6.79392 | -6.79463 | -6.79553 |
| 19 | -6.69444 | -6.88917 | -6.89013 | -6.89115 |
| 20 | -6.74978 | -6.97945 | -6.98062 | -6.98184 |

La solution proposée fournit donc une technique de calcul explicite des coefficients des filtres prototypes de systèmes modulés, présentant de nombreux avantages (rapidité de calcul, possibilité d'implantation dans des systèmes fonctionnant en temps réel, etc).

En particulier, dans la plupart des cas, les filtres prototypes obtenus présentent une meilleure localisation temps/fréquence que les filtres prototypes obtenus en mettant en oeuvre une technique d'optimisation des angles comme proposé dans l'art antérieur.

De plus, la solution proposée s'applique de façon immédiate au cas des systèmes suréchantillonnés mettant en oeuvre un facteur de suréchantillonnage égal à 2, et permet donc de déterminer, de manière équivalente, les coefficients des filtres prototypes utilisés pour les modulations OFDM/OQAM.

On note que la solution proposée est définie pour les filtres prototypes courts, de longueur L=N (où N défini le nombre de sous-porteuse, le facteur d'expansion ou de décimation, ou le nombre de sous-bandes, selon le système considéré). Ces filtres courts présentent l'avantage d'être moins complexes que les filtres longs, et assez performants pour certains types de canaux de transmission. En particulier, il a été démontré que les filtres prototypes les plus courts pouvaient mieux résister aux dérives fréquentielles, comme par exemple celles liées à l'effet Doppler. Ceci est d'autant plus vrai si le filtre prototype est optimisé en fonction du critère de maximisation de la localisation temps-fréquence qui a pour effet de concentrer l'énergie de la réponse impulsionnelle sur un nombre réduit de coefficients.

De plus, il est plus fréquent d'utiliser des filtres prototypes longs dans les systèmes de transmission, afin de séparer plus facilement les différents canaux de transmission. La solution proposée, qui se place dans le contexte particulier des filtres prototypes courts, est donc non-évidente pour l'Homme du Métier.

La solution proposée s'applique également dans des systèmes de modulations précodées, mettant notamment en oeuvre un faible nombre de sous-bandes.

Selon une règle de dualité classique, tous les résultats présentés peuvent également s'appliquer à des systèmes de codage en sous-bandes.

Enfin, un avantage de disposer de formules explicites est, dans le cas de réalisations pratiques de système de transmission multiporteuses ou de codage en sous-bandes, de permettre la mise en oeuvre en temps-réel de systèmes reconfigurables. Cela peut-être plus particulièrement intéressant dans le cas général des systèmes de type radio intelligente où, actuellement, dans le cas plus précis de l'utilisation de porteuses nulles (« white spaces ») pour des systèmes de type wi-fi.

*5.5 Structure du dispositif de détermination d'au moins un filtre d'un banc de filtres d'un système de transmission ou de codage, à partir d'un filtre prototype p*

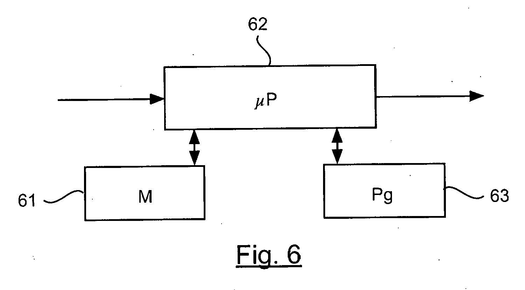

On présente finalement, en relation avec la figure 6, la structure simplifiée d'un dispositif mettant en oeuvre une technique de détermination d'au moins un filtre d'un banc de filtres d'un système de transmission ou de codage, à partir d'un filtre prototype p, selon un mode de réalisation particulier décrit ci-dessus.

Un tel dispositif comprend une mémoire 61 comprenant une mémoire tampon, une unité de traitement 62, équipée par exemple d'un microprocesseur $\mu$P, et pilotée par le programme d'ordinateur 63, mettant en oeuvre le procédé de détermination d'au moins un filtre d'un banc de filtres d'un système de transmission ou de codage, à partir d'un filtre prototype p selon un mode de réalisation particulier de l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée les valeurs des paramètres d, N et M. Le microprocesseur de l'unité de traitement 62 met en oeuvre les étapes du procédé décrit précédemment, selon les instructions du programme d'ordinateur 63, pour déterminer les coefficients du filtre prototype p, puis les coefficients d'au moins un filtre du banc d'analyse ou de synthèse. Pour cela, le dispositif comprend, outre la mémoire tampon 61, un module de détermination des coefficients **p[k]** du filtre prototype p de longueur L égale N utilisant $\Delta$ paramètres angulaires $\theta_i$ exprimés à partir d'une fonction polynomiale **f(x)**, encore appelée représentation compacte, telle que $f(x) = \frac{\pi}{4} + t \sum_{k=0}^{d-1} \beta_k T_{2k}(t)$, **t** = **2x** - 1. Ces moyens sont pilotés par le microprocesseur de l'unité de traitement 62.

## Revendications

1. Procédé de détermination d'au moins un filtre d'un banc de filtres d'un système de transmission ou de codage, à partir d'un filtre prototype p,
   **caractérisé en ce que** ledit procédé comprend une étape de détermination des coefficients *p[k]* dudit filtre prototype p, de longueur L égale N, à partir de $\Delta$ paramètres angulaires $\theta_i$, pour $0 \leq i \leq \Delta$ - 1 et $\Delta$ = *N/M* un entier relatif, exprimés à partir d'une fonction polynomiale *f(x)*, encore appelée représentation compacte, telle que :

$$f(x) = \frac{\pi}{4} + t \sum_{k=0}^{d-1} \beta_k T_{2k}(t)$$

$$t = 2x - 1$$

avec:

   - $T_n(t)$ le polynôme de Chebyshev de degré n ;
   - d le degré de la représentation compacte ;
   - $\beta_k$ les paramètres de la représentation compacte ;
   - $\theta_i = f(x_i)$ avec $x_i = \frac{2i+1}{2\Delta}$ ;
   - $p[i] = \cos \theta_i$, $p[M + i] = \sin \theta_i$, pour $0 \leq i \leq \Delta$ - 1 ;
   - $p[k] = 1$, $\Delta \leq k \leq$ M - 1;
   - M et N des entiers relatifs représentatifs dudit système de transmission ou de codage.

2. Procédé selon la revendication 1, **caractérisé en ce qu'**il comprend une étape d'estimation des paramètres $\beta_k$ de la représentation compacte, mettant en oeuvre au moins un algorithme de type régression linéaire.

3. Procédé selon la revendication 2, **caractérisé en ce que**, lorsque ledit degré d de la représentation compacte est égale à 2, ladite étape d'estimation délivre une estimation des paramètres $\beta_0$ et $\beta_1$ de la représentation compacte, telle que, en posant :

$$\gamma_0(M_0, \Delta) = \frac{\pi}{4} + \beta_0(M_0, \Delta) + \beta_1(M_0, \Delta)$$

on obtient les estimations suivantes :

$$\tilde{\beta}_1(M_0, \Delta, X) = \frac{X_0}{(X_1 + M_0)^2} + \frac{X_2}{\Delta(X_2 + M_0)^2},$$

$$\tilde{\gamma}_0(M_0, \Delta, X) = \left[ X_4 + \frac{X_5}{(X_6 + M_0)^2} + \Delta\left( X_7 + \frac{X_8}{(X_9 + M_0)^2} \right) \right]^{-1}$$

où X = ($X_i$, i = 0,...,9) sont des constantes et M = $\Delta M_0$.

4. Procédé selon la revendication 3, **caractérisé en ce qu'**il comprend une étape de raffinement des constantes X, mettant en oeuvre une minimisation de la fonction de coût J(X) suivante, pour différentes valeurs de $M_0$ et $\Delta$, telles que $M_0 \in \mathcal{M}_I$, où $\mathcal{M}_I = \left[ M_0^{min}, M_0^{max} \right]$, et $\Delta \in \mathcal{D}_I$, où $\mathcal{D}_I = \left[ \Delta^{min}, \Delta^{max} \right]$ :

$$J(X) = \sum_{M_0 \in \mathcal{M}_I} \sum_{\Delta \in \mathcal{D}_I} \left[ \beta_1(M_0, \Delta) - \tilde{\beta}_1(M_0, \Delta, X) \right]^2 + \left[ \gamma_0(M_0, \Delta) - \tilde{\gamma}_0(M_0, \Delta, X) \right]^2$$

5. Procédé selon les revendications 3 et 4, **caractérisé en ce que** lesdits $\Delta$ paramètres angulaires $\theta_i$, pour $0 \leq i \leq \Delta - 1$, s'expriment sous la forme suivante :

$$\theta_i = f(x_i) = \frac{\pi}{2}(1 - x_i) + (2x_i - 1)\left[ \frac{1}{c(M_0) + d(M_0)\Delta} + 2[(2x_i - 1)^2 - 1]\left[ a(M_0) + \frac{b(M_0)}{\Delta} \right] \right]$$

où $x_i = \frac{2i+1}{2\Delta}$ et :

$$a(M_0) = \frac{X_0}{(X_1 + M_0)^2}$$

$$b(M_0) = \frac{X_2}{(X_3 + M_0)^2}$$

$$c(M_0) = X_4 + \frac{X_5}{(M_0 + X_6)^2}$$

$$d(M_0) = X_7 + \frac{X_8}{(M_0 + X_9)^2}$$

6. Procédé selon la revendication 2, **caractérisé en ce que**, lorsque ledit degré d de la représentation compacte est égale à 3, ladite étape d'estimation délivre une estimation des paramètres $\beta_0$, $\beta_1$ et $\beta_2$ de la représentation compacte, telle que, en posant :

$$\gamma_0(M_0, \Delta) = \frac{\pi}{4} + \beta_0(M_0, \Delta) + \beta_1(M_0, \Delta) + \beta_2(M_0, \Delta)$$

on obtient les estimations suivantes :

$$\hat{\gamma}_0(M_0, \Delta, X) = \frac{1}{X_{M_0,0} + X_{M_0,1}\Delta}$$

$$\hat{\beta}_1(M_0, \Delta, X) = X_{M_0,2} + \frac{1}{X_{M_0,3} + X_{M_0,4}\Delta}$$

$$\hat{\beta}_2(M_0, \Delta, X) = X_{M_0,5} + \frac{1}{X_{M_0,6} + X_{M_0,7}\Delta}$$

où $X = (X_{M_0,i}, i = 0,...,7)$ sont des constantes et $M = \Delta M_0$.

7. Procédé selon la revendication 6, **caractérisé en ce qu'**il comprend une étape de raffinement des constantes $X$, délivrant des constantes raffinées $\hat{X} = (\hat{X}_{M_0,i}, i = 0,...,7)$, mettant en oeuvre une minimisation de la fonction de coût $J(X)$ suivante, pour différentes valeurs de $\Delta$, telles que $\Delta \in \mathcal{D}_l$, où $\mathcal{D}_l = \left[\Delta^{min}, \Delta^{max}\right]$ :

$$J(X) = \sum_{\Delta \in \mathcal{D}_l} \left\{ [\gamma_0(M_0, \Delta) - \hat{\gamma}_0(M_0, \Delta, X)]^2 + [\beta_1(M_0, \Delta) - \hat{\beta}_1(M_0, \Delta, X)]^2 \right.$$
$$\left. + [\beta_2(M_0, \Delta) - \hat{\beta}_2(M_0, \Delta, X)]^2 \right\}$$

8. Procédé selon les revendications 6 et 7, **caractérisé en ce que** lesdits $\Delta$ paramètres angulaires $\theta_i$, pour $0 \leq i \leq \Delta - 1$, s'expriment sous la forme suivante :

$$\theta_i = f(x_i) = \frac{\pi}{2}(1 - x_i) + \frac{2x_i - 1}{\hat{X}_{M_0,0} + \hat{X}_{M_0,1}\Delta} + 8x_i(2x_i^2 - 3x_i + 1)$$
$$\times \left[\hat{X}_{M_0,2} + \frac{1}{\hat{X}_{M_0,3} + \hat{X}_{M_0,4}\Delta} + 4\left(\hat{X}_{M_0,5} + \frac{1}{\hat{X}_{M_0,6} + \hat{X}_{M_0,7}\Delta}\right)(2x_i - 1)^2\right]$$

où $x_i = \frac{2i+1}{2\Delta}$.

9. Procédé selon la revendication 1, **caractérisé en ce que** ledit système de transmission ou de codage est de type OFDM suréchantillonné, mettant en oeuvre un facteur de suréchantillonnage $\frac{N}{M}$ tel que $N > M$, avec $N = \Delta N_0$, $M = \Delta M_0$, $N_0 = M_0 + 1$, et **en ce que** :

   - pour un système de transmission : M représente le nombre de sous-porteuses et N le facteur d'expansion ou de décimation, ou
   - pour un système de codage : M représente le facteur d'expansion ou de décimation et N le nombre de sous-bandes.

**10.** Procédé selon la revendication 1, **caractérisé en ce que** ledit système de transmission est de type MDFT, ou, de manière duale, ledit système de codage est de type banc de filtres modulé en cosinus, avec *N = 2M*, et **en ce que** :

- pour un système de transmission : M représente le facteur d'expansion ou de décimation et N le nombre de sous-porteuses, ou
- pour un système de codage : M le facteur d'expansion ou de décimation et N représente le nombre de sous-bandes.

**11.** Procédé selon la revendication 1, **caractérisé en ce que** ledit système de transmission est de type WOFDM ou, de manière duale, ledit système de codage est de type banc de filtres modulé en cosinus, et **en ce que** :

- pour un système de transmission : M représente le facteur d'expansion ou de décimation et le nombre de sous-porteuses, ou
- pour un système de codage : M représente le facteur d'expansion ou de décimation et le nombre de sous-bandes.

**12.** Dispositif de détermination d'au moins un filtre d'un banc de filtres d'un système de transmission ou de codage, à partir d'un filtre prototype p,
**caractérisé en ce que** ledit dispositif comprend un module de détermination des coefficients p[k] dudit filtre prototype p de longueur L égale N utilisant $\Delta$ paramètres angulaires $\theta_i$, pour $0 \le i \le \Delta$ - 1 et $\Delta = N/M$ un entier relatif, exprimés à partir d'une fonction polynomiale *f*(*x*), encore appelée représentation compacte, telle que :

$$f(x) = \frac{\pi}{4} + t \sum_{k=0}^{d-1} \beta_k T_{2k}(t)$$

$$t = 2x - 1$$

avec :

- $T_n(t)$ le polynôme de Chebyshev de degré n ;
- d le degré de la représentation compacte ;
- $\beta_k$ les paramètres de la représentation compacte ;
- $\theta_i = f(x_i)$ avec $x_i = \frac{2i+1}{2\Delta}$ ;
- p[i] = $\cos\theta_i$, p[M + i] = $\sin\theta_i$, pour $0 \le i \le \Delta$ - 1 ;
- p[k] = 1, $\Delta \le k \le$ M - 1
- M et N des entiers relatifs représentatifs dudit système de transmission ou de codage.

**13.** Programme d'ordinateur comportant des instructions pour la mise en oeuvre d'un procédé de détermination d'au moins un filtre d'un banc de filtres selon la revendication 1 lorsque ce programme est exécuté par un processeur.

**Patentansprüche**

**1.** Verfahren zur Bestimmung mindestens eines Filters einer Filterbank eines Übertragungs- oder Codiersystems, ausgehend von einem Prototyp-Filter p,
**dadurch gekennzeichnet, dass** das Verfahren einen Schritt der Bestimmung der Koeffizienten p[k] des Prototyp-Filters p einer Länge L gleich N ausgehend von $\Delta$ Winkelparametern $\theta_i$ enthält, für $0 \le i \le \Delta$ - 1 und $\Delta = N/M$ eine ganze Zahl, ausgedrückt ausgehend von einer Polynomialfunktion f(x), auch kompakte Darstellung genannt, derart, dass gilt:

$$f(x) = \frac{\pi}{4} + t \sum_{k=0}^{d-1} \beta_k T_{2k}(t)$$

$$t = 2x - 1$$

mit:

- $T_n(t)$ dem Chebyshev-Polynom des Grads n;
- d dem Grad der kompakten Darstellung;
- $\beta_k$ den Parametern der kompakten Darstellung;
- $\theta_i = f(x_i)$ mit $x_i = \frac{2i+1}{2\Delta}$;
- $p[i] = \cos\theta_i$, $p[M+i] = \sin\theta_i$, für $0 \leq i \leq \Delta-1$;
- $p[k] = 1$, $\Delta \leq k \leq M-1$;
- M und N ganzen Zahlen, die für das Übertragungs- oder Codiersystem repräsentativ sind.

2. Verfahren nach Anspruch 1, **dadurch gekennzeichnet, dass** es einen Schritt der Schätzung der Parameter $\beta_k$ der kompakten Darstellung enthält, der mindestens einen Algorithmus von der Art lineare Regression anwendet.

3. Verfahren nach Anspruch 2, **dadurch gekennzeichnet, dass**, wenn der Grad d der kompakten Darstellung gleich 2 ist, der Schätzschritt eine Schätzung der Parameter $\beta_0$ und $\beta_1$ der kompakten Darstellung liefert, derart, dass, wenn vorausgesetzt wird:

$$\gamma_0(M_0, \Delta) = \frac{\pi}{4} + \beta_0(M_0, \Delta) + \beta_1(M_0, \Delta)$$

die folgenden Schätzungen erhalten werden:

$$\tilde{\beta}_1(M_0, \Delta, X) = \frac{X_0}{(X_1+M_0)^2} + \frac{X_2}{\Delta(X_2+M_0)^2} \quad ,$$

$$\tilde{\gamma}_0(M_0, \Delta, X) = \left[X_4 + \frac{X_5}{(X_6 + M_0)^2} + \Delta\left(X_7 + \frac{X_8}{(X_9 + M_0)^2}\right)\right]^{-1}$$

wobei $X = (X_i, i = 0,\dots, 9)$ Konstanten sind und $M = \Delta M_0$.

4. Verfahren nach Anspruch 3, **dadurch gekennzeichnet, dass** es einen Schritt der Verfeinerung der Konstanten X enthält, der eine Minimierung der folgenden Kostenfunktion J(X) für verschiedene Werte von $M_0$ und $\Delta$ anwendet, derart, dass gilt $M_0 \in \mathcal{M}_I$, wobei $\mathcal{M}_I = \left[M_0^{min}, M_0^{max}\right]$, und $\Delta \in \mathcal{D}_I$, wobei $\mathcal{D}_I = \left[\Delta^{min}, \Delta^{max}\right]$ :

$$J(X) = \sum_{M_0 \in \mathcal{M}_I} \sum_{\Delta \in \mathcal{D}_I} \left[\beta_1(M_0, \Delta) - \tilde{\beta}_1(M_0, \Delta, X)\right]^2 + \left[\gamma_0(M_0, \Delta) - \tilde{\gamma}_0(M_0, \Delta, X)\right]^2$$

5. Verfahren nach den Ansprüchen 3 und 4, **dadurch gekennzeichnet, dass** die $\Delta$ Winkelparameter $\theta_i$, für $0 \leq i \leq \Delta - 1$, folgendermaßen ausgedrückt werden:

$$\theta_i = f(x_i) = \frac{\pi}{2}(1 - x_i) + (2x_i - 1)\left[\frac{1}{c(M_0)+d(M_0)\Delta} + 2[(2x_i - 1)^2 - 1]\left[a(M_0) + \frac{b(M_0)}{\Delta}\right]\right]$$

wobei $x_i = \frac{2i+1}{2\Delta}$ und:

$$a(M_0) = \frac{X_0}{(X_1 + M_0)^2}$$

$$b(M_0) = \frac{X_2}{(X_3 + M_0)^2}$$

$$c(M_0) = X_4 + \frac{X_5}{(M_0 + X_6)^2}$$

$$d(M_0) = X_7 + \frac{X_8}{(M_0 + X_9)^2}$$

6. Verfahren nach Anspruch 2, **dadurch gekennzeichnet, dass**, wenn der Grad d der kompakten Darstellung gleich 3 ist, der Schätzschritt eine Schätzung der Parameter $\beta_0$, $\beta_1$ und $\beta_2$ der kompakten Darstellung liefert, derart, dass, wenn vorausgesetzt wird:

$$\gamma_0(M_0, \Delta) = \frac{\pi}{4} + \beta_0(M_0, \Delta) + \beta_1(M_0, \Delta) + \beta_2(M_0, \Delta)$$

die folgenden Schätzungen erhalten werden:

$$\hat{\gamma}_0(M_0, \Delta, X) = \frac{1}{X_{M_0,0} + X_{M_0,1}\Delta}$$

$$\hat{\beta}_1(M_0, \Delta, X) = X_{M_0,2} + \frac{1}{X_{M_0,3} + X_{M_0,4}\Delta}$$

$$\hat{\beta}_2(M_0, \Delta, X) = X_{M_0,5} + \frac{1}{X_{M_0,6} + X_{M_0,7}\Delta}$$

wobei $X = (X_{M_0,i}, i = 0, ..., 7)$ Konstanten sind und $M = \Delta M_0$.

7. Verfahren nach Anspruch 6, **dadurch gekennzeichnet, dass** es einen Schritt der Verfeinerung der Konstanten X enthält, der verfeinerte Konstanten $\hat{X} = (\hat{X}_{M_0,i}, i = 0,...,7)$ liefert, der eine Minimierung der folgenden Kostenfunktion J(X) anwendet, für verschiedene Werte von $\Delta$, wie $\Delta \in \mathcal{D}_I$, wobei $\mathcal{D}_I = [\Delta^{min}, \Delta^{max}]$:

$$J(X) = \sum_{\Delta \in \mathcal{D}_I} \{[\gamma_0(M_0, \Delta) - \hat{\gamma}_0(M_0, \Delta, X)]^2 + [\beta_1(M_0, \Delta) - \hat{\beta}_1(M_0, \Delta, X)]^2$$
$$+ [\beta_2(M_0, \Delta) - \hat{\beta}_2(M_0, \Delta, X)]^2$$

8. Verfahren nach den Ansprüchen 6 und 7, **dadurch gekennzeichnet, dass** die $\Delta$ Winkelparameter $\theta_i$, für $0 \leq i \leq \Delta - 1$, folgendermaßen ausgedrückt werden:

$$\theta_i = f(x_i) = \frac{\pi}{2}(1 - x_i) + \frac{2x_i - 1}{\hat{X}_{M_0,0} + \hat{X}_{M_0,1}\Delta} + 8x_i(2x_i^2 - 3x_i + 1)$$

$$\times \left[ \hat{X}_{M_0,2} + \frac{1}{\hat{X}_{M_0,3} + \hat{X}_{M_0,4}\Delta} + 4\left( \hat{X}_{M_0,5} + \frac{1}{\hat{X}_{M_0,6} + \hat{X}_{M_0,7}\Delta} \right)(2x_i - 1)^2 \right]$$

wobei gilt $x_i = \frac{2i+1}{2\Delta}$.

9. Verfahren nach Anspruch 1, **dadurch gekennzeichnet, dass** das Übertragungs- oder Codiersystem von der Art überabgetastetes OFDM ist, das einen Überabtastfaktor $\frac{N}{M}$ anwendet, derart, dass gilt N > M, mit N = $\Delta N_0$, M = $\Delta M_0$, $N_0 = M_0 + 1$, und dass:

- für ein Übertragungssystem: M die Anzahl von Unterträgern und N den Expansions- oder Dezimierungsfaktor darstellt, oder
- für ein Codiersystem: M den Expansions- oder Dezimierungsfaktor und N die Anzahl von Unterbändern darstellt.

10. Verfahren nach Anspruch 1, **dadurch gekennzeichnet, dass** das Übertragungssystem von der Art MDFT, oder dual das Codiersystem von der Art Cosinusmodulierte Filterbank ist, mit N = 2M, und dass:

- für ein Übertragungssystem: M den Expansions- oder Dezimierungsfaktor und N die Anzahl von Unterträgern darstellt, oder
- für ein Codiersystem: M den Expansions- oder Dezimierungsfaktor und N die Anzahl von Unterbändern darstellt.

11. Verfahren nach Anspruch 1, **dadurch gekennzeichnet, dass** das Übertragungssystem von der Art WOFDM oder dual das Codiersystem von der Art Cosinusmodulierte Filterbank ist, und dass:

- für ein Übertragungssystem: M den Expansions- oder Dezimierungsfaktor und die Anzahl von Unterträgern darstellt, oder
- für ein Codiersystem: M den Expansions- oder Dezimierungsfaktor und die Anzahl von Unterbändern darstellt.

12. Vorrichtung zur Bestimmung mindestens eines Filters einer Filterbank eines Übertragungs- oder Codiersystems, ausgehend von einem Prototyp-Filter p, **dadurch gekennzeichnet, dass** die Vorrichtung ein Modul zur Bestimmung der Koeffizienten p[k] des Prototyp-Filters p einer Länge L gleich N enthält, unter Verwendung von $\Delta$ Winkelparametern $\theta_i$, für $0 \le i \le \Delta$ - 1 und $\Delta$ = N/M eine ganze Zahl, ausgedrückt ausgehend von einer Polynomialfunktion f(x), auch kompakte Darstellung genannt, derart, dass gilt:

$$f(x) = \frac{\pi}{4} + t \sum_{k=0}^{d-1} \beta_k T_{2k}(t)$$

$$t = 2x - 1$$

mit:

- $T_n(t)$ dem Chebyshev-Polynom des Grads n;
- d dem Grad der kompakten Darstellung;
- $\beta_k$ den Parametern der kompakten Darstellung;
- $\theta_i$ = f(xi) mit $x_i = \frac{2i+1}{2\Delta}$ ;
- p[i] = $\cos\theta_i$, p(M+i) - $\sin\theta_i$, für $0 \le i \le \Delta$ - 1;
- p[k] = 1, $\Delta \le k \le M$ - 1
- M und N ganzen Zahlen, die für das Übertragungs- oder Codiersystem repräsentativ sind.

13. Computerprogramm, das Anweisungen zur Anwendung eines Verfahrens zur Bestimmung mindestens eines Filters einer Filterbank nach Anspruch 1 aufweist, wenn dieses Programm von einem Prozessor ausgeführt wird.

**Claims**

1. Method of determining at least one filter of a filter bank of a transmission or coding system, on the basis of a prototype filter p,
**characterized in that** said method comprises a step of determining coefficients $p[k]$ of said prototype filter p, of length L equal to N, on the basis of $\Delta$ angular parameters $\theta_i$, for $0 \leq i \leq \Delta - 1$ and $\Delta = N/M$ a relative integer, expressed on the basis of a polynomial function $f(x)$, also called a compact representation, such that:

$$f(x) = \frac{\pi}{4} + t \sum_{k=0}^{d-1} \beta_k T_{2k}(t)$$

$$t = 2x - 1$$

with:

- $T_n(t)$ the Chebyshev polynomial of degree n;
- d the degree of the compact representation;
- $\beta_k$ the parameters of the compact representation;
- $\theta_i = f(x_i)$ with $x_i = \dfrac{2i+1}{2\Delta}$ ;
- $p[i] = \cos\theta_i$, $p[M + i] = \sin\theta_i$, for $0 \leq i \leq \Delta - 1$ ;
- $p[k] = 1$, $\Delta \leq k \leq M - 1$ ;
- M and N relative integers representative of said transmission or coding system.

2. Method according to Claim 1, **characterized in that** it comprises a step of estimating the parameters $\beta_k$ of the compact representation, implementing at least one algorithm of linear regression type.

3. Method according to Claim 2, **characterized in that**, when said degree d of the compact representation is equal to 2, said estimating step delivers an estimation of the parameters $\beta_0$ and $\beta_1$ of the compact representation, such that, by putting:

$$\gamma_0(M_0, \Delta) = \frac{\pi}{4} + \beta_0(M_0, \Delta) + \beta_1(M_0, \Delta)$$

we obtain the following estimations:

$$\tilde{\beta}_1(M_0, \Delta, X) = \frac{X_0}{(X_1 + M_0)^2} + \frac{X_2}{\Delta(X_2 + M_0)^2},$$

$$\tilde{\gamma}_0(M_0, \Delta, X) = \left[X_4 + \frac{X_5}{(X_6 + M_0)^2} + \Delta\left(X_7 + \frac{X_8}{(X_9 + M_0)^2}\right)\right]^{-1}$$

where $X = (X_i, i = 0, ..., 9)$ are constants and $M = \Delta M_0$.

4. Method according to Claim 3, **characterized in that** it comprises a step of refining the constants X, implementing a minimization of the following cost function J(X), for various values of $M_0$ and $\Delta$, such that $M_0 \in M_1$, where $M_1 = \left[ M_0^{min}, M_0^{max} \right]$, and $\Delta \in D_1$, where $D_1 = [\Delta^{min}, \Delta^{max}]$ :

$$J(X) = \sum_{M_0 \in M_1} \sum_{\Delta \in D_1} \left[ \beta_1(M_0, \Delta) - \tilde{\beta}_1(M_0, \Delta, X) \right]^2 + \left[ \gamma_0(M_0, \Delta) - \tilde{\gamma}_0(M_0, \Delta, X) \right]^2$$

5. Method according to Claims 3 and 4, **characterized in that** said $\Delta$ angular parameters $\theta_i$, for $0 \le i \le \Delta - 1$, are expressed in the following form:

$$\theta_i = f(x_i) = \frac{\pi}{2}(1 - x_i) + (2x_i - 1)\left[ \frac{1}{c(M_0) + d(M_0)\Delta} + 2[(2x_i - 1)^2 - 1]\left[ a(M_0) + \frac{b(M_0)}{\Delta} \right] \right]$$

where $x_i = \frac{2i+1}{2\Delta}$ and:

$$a(M_0) = \frac{X_0}{(X_1 + M_0)^2}$$

$$b(M_0) = \frac{X_2}{(X_3 + M_0)^2}$$

$$c(M_0) = X_4 + \frac{X_5}{(M_0 + X_6)^2}$$

$$d(M_0) = X_7 + \frac{X_8}{(M_0 + X_9)^2}$$

6. Method according to Claim 2, **characterized in that**, when said degree d of the compact representation is equal to 3, said estimating step delivers an estimation of the parameters $\beta_0$, $\beta_1$ and $\beta_2$ of the compact representation, such that, by putting:

$$\gamma_0(M_0, \Delta) = \frac{\pi}{4} + \beta_0(M_0, \Delta) + \beta_1(M_0, \Delta) + \beta_2(M_0, \Delta)$$

we obtain the following estimations:

$$\tilde{\gamma}_0(M_0, \Delta, X) = \frac{1}{X_{M_0,0} + X_{M_0,1}\Delta}$$

$$\hat{\beta}_1(M_0, \Delta, X) = X_{M_0,2} + \frac{1}{X_{M_0,3} + X_{M_0,4}\Delta}$$

$$\hat{\beta}_2(M_0, \Delta, X) = X_{M_0,5} + \frac{1}{X_{M_0,6} + X_{M_0,7}\Delta}$$

where X = ($X_{M0i}$, $i$ = 0, ..., 7) are constants and $M = \Delta M_0$.

7. Method according to Claim 6, **characterized in that** it comprises a step of refining the constants $X$, delivering refined constants $\widehat{X} = \left(\widehat{X}_{M_0 i}, i = 0, ..., 7\right)$, implementing a minimization of the following cost function J(X), for various values of $\Delta$, such that $\Delta \in D_1$, where $D_1 = [\Delta^{min}, \Delta^{max}]$ :

$$J(X) = \sum_{\Delta \in D_1} \left\{ [\gamma_0(M_0, \Delta) - \hat{\gamma}_0(M_0, \Delta, X)]^2 + [\beta_1(M_0, \Delta) - \hat{\beta}_1(M_0, \Delta, X)]^2 \right.$$
$$\left. + [\beta_2(M_0, \Delta) - \hat{\beta}_2(M_0, \Delta, X)]^2 \right\}$$

8. Method according to Claims 6 and 7, **characterized in that** said $\Delta$ angular parameters $\theta_i$, for $0 \le i \le \Delta - 1$, are expressed in the following form:

$$\theta_i = f(x_i) = \frac{\pi}{2}(1 - x_i) + \frac{2x_i - 1}{\hat{X}_{M_0,0} + \hat{X}_{M_0,1}\Delta} + 8x_i(2x_i^2 - 3x_i + 1)$$
$$\times \left[ \hat{X}_{M_0,2} + \frac{1}{\hat{X}_{M_0,3} + \hat{X}_{M_0,4}\Delta} + 4\left( \hat{X}_{M_0,5} + \frac{1}{\hat{X}_{M_0,6} + \hat{X}_{M_0,7}\Delta} \right)(2x_i - 1)^2 \right]$$

where $x_i = \dfrac{2i + 1}{2\Delta}$ .

9. Method according to Claim 1, **characterized in that** said transmission or coding system is of oversampled OFDM type, implementing an oversampling factor $\dfrac{N}{M}$ such that N > M, with $N = \Delta N_0$, $M = \Delta M_0$, $N_0 = M_0 + 1$, and **in that**:

   - for a transmission system: M represents the expansion or decimation factor and N the number of sub-carriers, or
   - for a coding system: M represents the expansion or decimation factor and N the number of subbands.

10. Method according to Claim 1, **characterized in that** said transmission system is of MDFT type, or, in a dual manner, said coding system is of cosine modulated filter bank type, with $N = 2M$, and **in that**:

   - for a transmission system: M represents the number of sub-carriers and N the expansion or decimation factor, or
   - for a coding system: M represents the expansion or decimation factor and N the number of subbands.

11. Method according to Claim 1, **characterized in that** said transmission system is of WOFDM type or, in a dual manner, said coding system is of cosine modulated filter bank type, and **in that**:

   - for a transmission system: M represents the expansion or decimation factor and the number of sub-carriers, or
   - for a coding system: M represents the expansion or decimation factor and the number of subbands.

**12.** Device for determining at least one filter of a filter bank of a transmission or coding system, on the basis of a prototype filter p,
**characterized in that** said device comprises a module for determining coefficients $p[k]$ of said prototype filter p, of length L equal to N, on the basis of $\Delta$ angular parameters $\theta_i$, for $0 \le i \le \Delta$ - 1 and $\Delta = N/M$ a relative integer, expressed on the basis of a polynomial function $f(x)$, also called a compact representation, such that:

$$f(x) = \frac{\pi}{4} + t \sum_{k=0}^{d-1} \beta_k T_{2k}(t)$$

$$t = 2x - 1$$

with:

- $T_n(t)$ the Chebyshev polynomial of degree n;
- d the degree of the compact representation;
- $\beta_k$ the parameters of the compact representation;
- $\theta_i = f(x_i)$ with $\iota$
- $p[i] = \cos\theta_i$, $p[M + i] = \sin\theta_i$, for $0 \le i \le \Delta$ - 1 ;
- $p[k] = 1, \Delta \le k \le$ M - 1 ;
- M and N relative integers representative of said transmission or coding system.

**13.** Computer program comprising instructions for the implementation of a method of determining at least one filter of a filter bank according to Claim 1 when this program is executed by a processor.

Fig. 1A

Fig. 1B

Fig. 2A

Fig. 2B

Fig. 3A

Fig. 3B

Fig. 4

Fig. 5A

Fig. 5B

Fig. 5C

Fig. 5D

_Fig. 6_

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. SIOHAN ; C. SICLET ; N. LACAILLE.** Analysis and design of OFDM/OQAM systems based on filter-bank theory. *IEEE Transactions on Signal Processing,* Mai 2002, vol. 50 (5), 1170-1183

- **DE C. SICLET ; P. SIOHAN ; D. PINCHON.** Perfect reconstruction conditions and design of oversampled DFT-modulated transmultiplexers. *EURASIP J. Appl. Sig. Proc.,* 2006, 1-14
- Closed form expression of optimal short PR FMT prototype filters. *Proceedings Globecom'11,* Décembre 2011